# EUROPÄISCHE PATENTSCHRIFT

(11) **EP 2 405 236 B1**
(45) Veröffentlichungstag und Bekanntmachung des Hinweises auf die Patenterteilung: **31.10.2012**
(21) Anmeldenummer: 10168771.3
(22) Anmeldetag: 07.07.2010
(51) Int. Cl.: G01C 1/04, G01C 15/00

(54) **Geodätisches Vermessungsgerät mit automatischer hochpräziser Zielpunkt-Anzielfunktionalität**
Geodesic measuring device with automatic extremely precise targeting functionality
Appareil de mesure géodésique doté d'une fonction haute précision de ciblage de point cible

(43) Veröffentlichungstag der Anmeldung: 11.01.2012
(73) Patentinhaber: Leica Geosystems AG, 9435 Heerbrugg (CH)
(72) Erfinder: Kotzur, Norbert, CH-9450 Altstätten (CH); Metzler, Bernhard, A-6850, Dornbirn (AT)
(74) Vertreter: Kaminski Harmann

(56) Entgegenhaltungen:
- DE-A1- 10 235 888

## Beschreibung

Die Erfindung betrifft ein geodätisches Vermessungsgerät, insbesondere einen Theodoliten oder eine Totalstation, gemäss dem Oberbegriff von Anspruch 1, mit einer automatischen hochpräzisen Zielpunkt-Anzielfunktionalität zur Positionsbestimmung eines Zielpunkts, ein Verfahren zum mit geodätischer Genauigkeit erfolgenden Positionsbestimmen eines Zielpunkts gemäss dem Oberbegriff von Anspruch 12 sowie ein auf einer - als Auswertemittel des geodätischen Vermessungsgeräts ausgebildeten - elektronischen Datenverarbeitungseinheit ausführbares Computerprogramm gemäss dem Oberbegriff von Anspruch 13.

Zum Vermessen eines Zielpunktes sind seit der Antike zahlreiche geodätische Vermessungsgeräte bekannt. Als räumliche Standarddaten werden dabei Richtung bzw. Winkel und meist auch Entfernung von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und ggf. Distanzmessfunktion, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

In vielen geodätischen Anwendungen erfolgt eine Vermessung von Punkten, indem dort speziell ausgestaltete Zielobjekte platziert werden. Diese bestehen meist aus einem Lotstock mit einem Reflektor (z.B. einem Rundum-Prisma) zur Definition der Messtrecke bzw. des Messpunktes. Bei solchen Vermessungsaufgaben werden zur Steuerung des Messvorgangs sowie zur Festlegung oder Registrierung von Messparametern eine Anzahl von Daten, Anweisungen, Sprache und weiteren Informationen zwischen Zielobjekt - insbesondere einem handhaltbaren Datenerfassungsgerät seitens des Zielobjekts - und zentralem Messgerät übertragen. Beispiele für solche Daten sind die Identifikation des Zielobjekts (Art des verwendeten Prismas), Neigung des Lotstocks, Höhe des Reflektors über Grund, Reflektorkonstanten oder Messwerte wie Temperatur oder Luftdruck. Diese Informationen bzw. situationsbedingten Parameter sind erforderlich, um eine hochpräzise Anzielung und Vermessung des durch den Lotstab mit Prisma definierten Messpunktes zu ermöglichen.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiters über eine Funkdatenschnittstelle verfügen zum Aufbau einer Funkverbindung zu externen Peripheriekomponenten wie z.B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Beispielsweise ist eine solche Visiereinrichtung eines geodätischen Vermessungsgeräts in der Europäischen Patentanmeldung Nr. 09152540.2 beschrieben. Automatische Fokussiereinrichtungen für Zielfernrohre geodätischer Geräte sind z.B. aus der DE 197 107 22, der DE 199 267 06 oder der DE 199 495 80 bekannt.

Das optische System bzw. der optische Sichtkanal der Visiereinrichtung enthält meist eine Objektivlinsengruppe, ein Bildumkehrsystem, eine Fokussieroptik, eine Strichplatte zur Erzeugung eines Fadenkreuzes und ein Okular, die z.B. in dieser Reihenfolge von der Objektseite her angeordnet sind. Die Position der Fokussierlinsengruppe wird abhängig von der Objektentfernung so eingestellt, dass ein scharfes Objektbild auf der in der Scharfstellebene angeordneten Strichplatte entsteht. Dieses kann dann durch das Okular betrachtet oder z.B. anhand einer koaxial angeordneten Kamera erfasst werden.

Beispielhaft ist der Aufbau gattungsgemässer Zielfernrohre von geodätischen Geräten in den Veröffentlichungsschriften EP 1 081 459 oder EP 1 662 278 gezeigt.

Aufgrund des meist sowohl als Sichtkanal als auch für Messungen gemeinsam zu nutzenden Strahlengangs erfordern solche Geräte dessen technische Auslegung in der Bauweise eines Teleskops mit spezialisierten, hochpräzisen und aufwändig herzustellenden Optiken. Des Weiteren sind für die koaxiale elektronische Distanzmessung ein zusätzlicher separater Sende- und Empfangskanal sowie eine zusätzliche Bildebene für die Wellenlänge des Distanzmessers vorgesehen.

Da Zielobjekte (z.B. die für geodätische Zwecke meist verwendeten Lotstäbe mit Zielmarke wie einem Rundum-Prisma) anhand der Visiereinrichtung trotz der oft bereitgestellten 30-fachen optischen Vergrösserung mit blossem Auge genügend präzise angezielt werden können (d.h. nicht geodätische Genauigkeitsanforderungen entsprechend), weisen gängige Vermessungsgeräte inzwischen standardmässig eine automatische Zielverfolgungs-Funktion für als Ziel-Reflektor dienende Prismen (ATR: "Automatic Target Recognition") auf. Dafür sind gängigerweise eine weitere separate ATR-Lichtquelle - z.B. ein Multimodefaserausgang, die optische Strahlung mit einer Wellenlänge im Bereich von 850 nm emittiert - und ein spezieller, für diese Wellenlänge sensitiver ATR-Detektor (z.B. CCD-Flächensensor) zusätzlich im Teleskop integriert.

Im Rahmen der ATR-Feinanzielfunktion wird dabei in Richtung der optischen Zielachse der Visiereinrichtung der ATR-Messstrahl emittiert, dieser wird am Prisma retroreflektiert und der reflektierte Strahl vom ATR-Sensor erfasst. Je nach Abweichung der Ausrichtung der optischen Zielachse vom Prisma weicht dabei auch die Auftreffposition der reflektierten Strahlung auf dem ATR-Sensor von einer zentralen Sensorflächenposition ab (d.h. der Reflexfleck des am Prisma retro-reflektierten ATR-Messstrahls auf dem ATR-Flächensensor liegt nicht im Zentrum des ATR-Flächensensors und trifft somit nicht auf einer Soll-Position auf, die z.B. anhand Kalibrierung als jene mit der optischen Zielachse korrespondierende Position festgelegt wurde).

Ist dies der Fall, so wird motorisiert die Ausrichtung der Visiereinrichtung derart geringfügig nachgestellt, dass der am Prisma retro-reflektierte ATR-Messstrahl hochpräzise im Zentrum der Sensorfläche auf dem ATR-Flächensensor auftrifft (d.h. die Horizontal- und Vertikalwinkel der Visiereinrichtung werden derart iterativ geändert und angepasst, bis das Zentrum des Reflexflecks mit der Soll-Position auf dem ATR-Flächensensor zusammenfällt). Alternativ kann eine Rest-Abweichung zwischen Auftreffpunkt des retro-reflektierten ATR-Messstrahls auf dem ATR-Flächensensor und dem Zentrum der Sensorfläche auch rechnerisch berücksichtigt und in einen Winkel umgewandelt werden, der zu dem - anhand der Winkelsensoren erfassten - Raumwinkel, in den die Zielachse zeigt, entsprechend addiert wird. D.h., der Raum-Winkel zum Zielpunkt kann in diesem Fall auch abgeleitet werden aus dem - anhand der Winkelsensoren erfassten - Raumwinkel der Zielachse und einer Ablage des detektierten ATR-Messstrahl-Reflexes vom Sensorzentrum (d.h. von jenem zentralen Punkt auf dem ATR-Sensor, an dem die Zielachse abgebildet wird).

Dadurch kann die erzielbare Genauigkeit bei der Ausrichtung der optischen Zielachse auf das Prisma gegenüber einer manuell erfolgenden Anzielung mit Fadenkreuz und basierend auf blossem Augenmass deutlich erhöht werden. Zur Sicherstellung des Funktionierens der automatischen Anzielung basierend auf Auswertung der Position des Reflexflecks des am Prisma retro-reflektierten ATR-Messstrahls auf dem ATR-Flächensensor ist es erforderlich, vor Funktionsstart die Visiereinrichtung zumindest derart ungefähr auf den Ziel-Reflektor auszurichten, dass der retro-reflektierte ATR-Messstrahl auch auf dem ATR-Flächensensor auftrifft. Dafür kann z.B. zuvor eine manuelle Anzielung des Ziel-Reflektors basierend auf Augenmass erfolgen oder eine automatische Grobanzielfunktion ausgeführt werden.

Das manuelle, grobe Anvisieren des Zielobjekts kann benutzerseitig zum einen erfolgen, indem das Zielobjekt auf einem Benutzerdisplay der Anzeige-Steuereinheit direkt am Vermessungsgerät oder auf dem Display eines separaten Peripheriegerätes (z.B. Datenlogger als Fernsteuerung) betrachtet und angezielt wird. Oft erfolgt dies jedoch nach wie vor mittels Betrachten des Ziels durch das Okular des Zielfernrohrs (d.h. der Visiereinrichtung), da im praktischen Einsatz - z.B. bei Sonneneinstrahlung - ein angezeigtes Display-Bild auf der Anzeige-Steuereinheit bzw. dem Datenlogger ungenügend erkennbar sein kann.

Neben der ATR-Feinanzielfunktion kann auf ähnliche Weise und unter Verwendung derselben ATR-Komponenten (wie ATR-Lichtquelle und ATR-Detektor) auch eine automatische Zielverfolgungs-Funktionalität bereitgestellt sein. Nach erfolgter ATR-Feinanzielung (d.h. nachdem die Visiereinrichtung derart auf das Ziel ausgerichtet ist, dass das Zentrum des ATR-Messstrahlungs-Reflexfleck mit der - mit der Zielachse korrespondierenden - Soll-Position auf dem ATR-Flächensensor zusammenfällt) kann dann die Anvisiereinrichtung weiterhin derart Bewegungen des Zieles "live" und entsprechend schnell nachgeführt werden, dass das Zentrum des ATR-Messstrahlungs-Reflexfleck weiterhin möglichst genau und stets auf der Soll-Position auf dem ATR-Flächensensor bleibt. Es wird dann oft davon gesprochen, dass das Ziel "eingelockt" ist. Probleme können hierbei auftreten, wenn sich das Ziel derart ruckartig und schnell bewegt, dass es aus dem Sichtbereich des ATR-Detektors verschwindet (d.h. keine am Ziel reflektierte ATR-Messstrahlung mehr auf dem ATR-Flächensensor auftrifft).

Z.B. wird in der EP 2 141 450 ein Vermessungsgerät mit Funktion zur automatischen Anzielung eines retroreflektierenden Ziels sowie mit automatischer Zielverfolgungsfunktionalität beschrieben. Um dabei auch bei schnellen und ruckartigen Bewegungen das Ziel im "eingelockten" Zustand zu halten und nicht zu aus dem Sichtbereich des Feinanziel-Detektors zu verlieren, wird vorgeschlagen parallel durch eine (im sichtbaren Wellenlängenbereich sensitive) Kamera Bilder des Ziels aufzunehmen und anhand von Bildverarbeitung Bewegungen des Ziels (bzw. Bewegungen von sich zusammen mit dem Ziel mitbewegenden Objekten) zu verfolgen, und dadurch im Falle eines Verlierens des Ziels aus dem "eingelockten" Zustand das Wiederauffinden und Wiedereinlocken des RetroReflektors zu erleichtern.

Alternativ zur Vermessung von retroreflektierenden Zielen mithilfe beschriebener ATR-Feinanzielfunktionen ist auch eine Vermessung von retroreflektorlosen Zielen bekannt. Da Ziele solcher Art jedoch - bei Beaufschlagung derselben mit einem ATR-Messstrahl (wie oben beschrieben) - diesen diffus reflektieren würden und somit dadurch bei Weitem kein hinreichend hinsichtlich einer Auftreffposition auswertbarer Reflexfleck auf dem ATR-Flächensensor erzeugt würde, sind derartige Anzielfunktionen, die auf dem Prinzip der aktiven Beaufschlagung des Ziels mit Messstrahlung und der Detektion und Auswertung einer Auftreffposition der am Ziel reflektierten Messstrahlung beruhen (wie etwa die oben Beschriebene), für retroreflektorlose Ziele nicht anwendbar. Hauptnachteil ist daher das bei Vermessungsgeräten des Standes der Technik gegebene Erfordernis der rein manuellen Fein-Anvisierung solcher retroreflektorloser Ziele, was sowohl oft zu einer ungenügenden Genauigkeit bei der Messung der Raumwinkel des Ziels führt (da die Genauigkeit beim Fein-Anvisieren des Ziels dann abhängig vom Geschick und vom Augenmass eines Vermessers/Bedieners ist) als auch einen hohen Aufwand erfordert (da hinreichende Geduld, Behutsamkeit und Sorgfältig für ein manuelles Fein-Anvisieren des Ziels seitens des Bedieners unerlässlich ist). Das bei retroreflektorlosen Zielen erforderliche manuelle Fein-Anzielen ist also aufwändig, zeitraubend, unzuverlässig, wenig robust.

Die DE 102 35 888 A1 beschreibt eine Vermessungsvorrichtung mit einer automatischen Ziel-Kollimations-Funktion, die - unter anderem - auf das Auswerten eines mit einer Bildaufnahmevorrichtung von der Zielmarke aufgenommenen Bilds basiert. Dafür werden die Umgebung und somit auch eine dort vorhandene Zielmarke mit einer Beleuchtungseinrichtung obligatorisch beleuchtet und ein Bild davon aufgenommen.

Befindet sich das Bild des Ziels nahe dem Mittelpunkt des Teleskop-Fadenkreuzes (das die Kollimationsachse des Teleskops indiziert), wird das angezeigte Zielbild erkannt und eine Abweichung von Zielbild und Fadenkreuzmittelpunkt erfasst. Entsprechend der Abweichung werden Steuersignale zur automatischen Kollimation des Ziels (d.h. zur entsprechenden Ausrichtungsänderung des Teleskops auf das Ziel) erzeugt.

Wie genau das angezeigte und sich bereits in der Nähe der Kollimationsachse befindende Zielbild dabei erkannt wird bzw. eine Abweichung dessen zum Fadenkreuzmittelpunkt bestimmt wird, kann der DE 102 35 888 A1 nicht entnommen werden.

Des Weiteren sind aus dem Stand der Technik noch Verfahren bekannt, wobei mithilfe eines Bildes und Bildverarbeitung (insbesondere anhand einer im aufgenommenen Bild bestimmten Position eines Ziel-Objekts und abhängig von einer bekannten oder dabei erfassten Bildaufnahmerichtung) die Raumwinkel vom Messgerät zum Ziel-Objekt ermittelt werden. Derartige Verfahren sind z.B. in der WO 2005/026767 oder in der WO 2006/053837 beschrieben.

Zusammengefasst: Bei Verwendung von entsprechenden Reflektoren (insbesondere retroreflektierende Prismen) als Zielobjekte funktioniert also eine automatische ATR-Fein-Anzielung und Zielverfolgung mit Vermessungsgeräten des Standes der Technik hinlänglich gut und zuverlässig. Einziger grosser Nachteil diesbezüglich ist das unverzichtbare Erfordernis der Verwendung von solchen nur mit hohem Aufwand herzustellenden retroreflektierenden Zielobjekten wie Rundum-Prismen, die z.B. aus sechs Einzelprismen aufgebaut sind und solcherart eine präzise Retroreflexion des ATR-Messstrahls gewährleisten. Dementsprechend sind die Herstellungskosten für derartige retroreflektierende und sehr aufwändig gestaltete Rundum-Prismen hoch. Zudem sind aus Glas bestehende Zielobjekte vergleichsweise zerstörungsanfällig. Zum geodätischen Vermessen von retroreflektorlosen Zielen ist hingegen ein händisches Fein-Anvisieren des Ziels erforderlich, was daher wenig robust, wenig zuverlässig, wenig präzise und in der Durchführung aufwändig ist.

Eine Aufgabe ist daher das Bereitstellen eines Vermessungssystems mit hochpräziser automatischer Anzielfunktionalität, wobei auch auf weniger aufwändig herstellbare Zielobjekte eine dennoch mit geodätischer Genauigkeit erfolgende Fein-Anvisierung und Vermessung des durch das Zielobjekt definierten Zielpunkts ermöglicht ist. Insbesondere soll dabei eine Fein-Anvisierung (d.h. eine hochexakte Ausrichtung der Zielachse auf den Zielpunkt) auch bei Verwendung von retroreflektorlosen Zielen in wenig aufwändiger, schnell erfolgender, zuverlässiger und robuster Weise ermöglicht werden. Eine weitere Aufgabe ist das Bereitstellen eines geodätischen Vermessungsgeräts für ein solches Vermessungssystem sowie eine Methode zum hochpräzisen automatischen Anzielen eines weniger aufwändig herstellbaren Zielobjekts mit einem geodätischen Vermessungsgerät, wobei dennoch das Anzielen und Vermessen des durch das Zielobjekt definierten Zielpunkts mit hinlänglicher, geodätischer Genauigkeit - sowie insbesondere auf wenig aufwändige, schnelle, zuverlässige und robuste Weise - ermöglicht ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Erfindungsgemäss wird eine vorprogrammiert und automatisch erfolgende Funktion für ein geodätisches Vermessungsgerät zum Fein-Anzielen von bekannten Zielmarken unter Verwendung von Bildern, die von der Zielmarke aufgenommen werden, bereitgestellt.

Ein Satz von unterschiedlichen Zielmarken ist dabei vorbekannt, wobei die Zielmarken jeweils eine zur Indikation des Zielpunktes auf der Zielmarke geeignete Struktur/Gestalt (Muster, Form, etc.) aufweisen. In der Auswerteeinheit des Vermessungsgeräts sind zudem derart mit der Struktur bzw. der äusseren Gestalt der jeweiligen Zielmarken korrespondierende Muster (Zielmarkenmuster oder Zielmarkenschablone) in einer Zielmarkenmusterdatenbank gespeichert, sodass die jeweils verwendete und in einem Bild aufgenommene Zielmarke anhand des Musters erkannt, mit der abgebildeten Zielmarke im Bild in Übereinstimmung gebracht (d.h. "gematcht") und die Position der abgebildeten Zielmarke im Bild hochpräzise bestimmt werden kann. Abhängig von dieser bestimmten Position der Zielmarke bzw. des mit der Zielmarke in Übereinstimmung gebrachten Musters im Bild verfährt die Anzieleinrichtung des Vermessungsgeräts motorisiert und automatisch nun derart, dass die Zielachse der Anzieleinrichtung genau auf den Zielpunkt der Zielmarke ausgerichtet wird.

Die Schritte des Aufnehmens eines Bildes, des Auswerten des aufgenommenen Bildes (unter Verwendung des gespeicherten, durch einen Benutzer oder automatisch ausgewählten und aus der Zielmarkenmusterdatenbank aufgerufenen Musters für die Zielmarke und unter Matchen des Musters mit der im Bild aufgenommenen Zielmarke) und des motorisierten Verfahrens der Anzieleinrichtung (d.h. des Fein-Ausrichtens der Zielachse auf den Zielpunkt) erfolgen dabei automatisch im Rahmen eines vorprogrammiert ablaufenden Prozesses.

Mit anderen Worten ist gemäss eines Aspekts der Erfindung also ein Satz von unterschiedlichen, jeweils einen Zielpunkt hochpräzise definierenden Zielmarken bekannt, für die jeweils mit der äusseren Gestalt der jeweiligen Zielmarke korrespondierende Zielmarkenmuster in einer Zielmarkenmusterdatenbank in den Auswertemitteln gespeichert sind, wobei jeweils ein Hauptpunkt des Zielmarkenmusters als den jeweiligen Zielpunkt indizierend definiert ist. Dabei ist das der jeweils verwendeten Zielmarke automatisch oder durch den Benutzer des Vermessungsgeräts entsprechende Zielmarkenmuster für die Zielpunkt-Anzielfunktionalität auswählbar und aus der Zielmarkenmusterdatenbank für die automatisch ablaufende Zielpunkt-Anzielfunktionalität aufrufbar.

Die Erfindung ermöglicht somit ein automatisches Anzielen eines Zielpunkts mit geodätischer Genauigkeit auf eine wenig aufwändige, schnelle, sehr zuverlässige und extrem robuste Weise, ohne dabei angewiesen zu sein auf die Verwendung von vergleichsweise empfindlichen Retroreflektoren (wie Prismen aus Glas) als Zielmarken/Zielobjekte.

Beispielsweise können als Zielmarken nun vordefinierte z.B. auf Folie abgedruckte Muster infrage kommen, die in Grossserie produziert und auf ein an einen Vermessungsstab anbringbares Schild befestigt (insbesondere aufgeklebt) werden können.

Erfindungsgemäss wird also ein geodätisches Vermessungsgerät bereitgestellt, das mit einer automatischen Zielpunkt-Anzielfunktionalität zur Positionsbestimmung eines Zielpunkts ausgestattet ist, wobei der Zielpunkt durch eine bekannte Zielmarke mit dafür ausgelegter äusserer Gestalt im Raum hochpräzise angegeben wird. Das geodätische Vermessungsgerät ist vorzugsweise als Theodolit oder Totalstation ausgebildet.

Das geodätische Vermessungsgerät ist ausgerüstet mit einer Anzieleinrichtung (als Anvisiereinrichtung), insbesondere einem Ziel-Fernrohr, wobei die Anzieleinrichtung gegenüber einer Basis des Vermessungsgeräts zur Änderung einer Ausrichtung der Anzielvorrichtung motorisiert schwenkbar ist. Die Anzielvorrichtung ist zumindest ausgestattet mit einer eine optische Zielachse definierenden Objektiveinheit und einem Kamerasensor mit pixeldefinierter Auflösung zur Erfassung eines Kamerabildes der anvisierten Zielmarke. Ausserdem weist die Anzielvorrichtung einen Strahlengang zwischen der Objektiveinheit und dem Kamerasensor auf.

Das geodätische Vermessungsgerät ist des Weiteren ausgestattet mit einer Winkelmessfunktionalität zur hochpräzisen Erfassung der Ausrichtung der Zielachse, und Auswertemitteln für Bildverarbeitung, Datenspeicherung und Steuerung der Ausrichtung der Anzieleinrichtung.

Gemäss der Erfindung sind - wie zuvor bereits beschrieben - mit der äusseren Gestalt der jeweiligen Zielmarken korrespondierende Zielmarkenmuster in einer Zielmarkenmusterdatenbank in den Auswertemitteln gespeichert und die Auswertemittel zur Ausführung der automatischen Zielpunkt-Anzielfunktionalität derart ausgebildet, dass nach Funktionsstart automatisch folgende Schritte erfolgen:
- Aufnehmen eines Kamerabilds der Zielmarke,
- Matchen, insbesondere in Übereinstimmung bringen, des ausgewählten Zielmarkenmusters mit der Zielmarke im Kamerabild durch Bildverarbeitung, und
- motorisiertes Ändern der Ausrichtung der Anzieleinrichtung abhängig von einer Position des Hauptpunkts im Kamerabild in gematchtem Zustand des ausgewählten Zielmarkenmusters derart, dass die optische Zielachse hochpräzise auf den Zielpunkt ausgerichtet ist.

Typischerweise erfolgen zum hochpräzisen Ausrichten der optischen Zielachse auf den Zielpunkt die Schritte des Aufnehmens, Matchens und Änderns wiederholt und das hochpräzise Ausrichten iterativ durch Annäherung (d.h. die Ausrichtung wird derart iterativ verändert, dass sich der Abstand vom Hauptpunkt des Zielmarkenmusters zum Zielachsen-Bildpunkt in den aufgenommenen Bilder schrittweise verringert und schliesslich der Hauptpunkt mit dem Zielachsen-Bildpunkt in Deckung gebracht ist).

Als Zielachsen-Bildpunkt wird dabei jene Position im Bild verstanden, an welcher der durch die Zielachse geschnittene Punkt im Raum auf dem Kameraflächensensor abgebildet wird. Der Zielachsen-Bildpunkt oder die Zielachsenposition im Kamerabild entspricht also dem durch die Zielachse angezielten Punkt im Kamerabild. Durch Kalibrieren der Kamera kann z.B. dieser Zielachsen-Bildpunkt (als Zielachsenposition im Bild) vorab bestimmt und definiert werden. Die Zielachsenposition kann dabei im Rahmen einer Kalibrierung auch im Subpixelbereich, d.h. mit einer höheren Genauigkeit als der pixeldefinierten Auflösung des Kamerasensors, bestimmt werden.

Anders ausgedrückt können also durch die Auswertemittel im Rahmen der automatischen Zielpunkt-Anzielfunktionalität - vorzugsweise nach dem Schritt des Matchens - die Positionen des Hauptpunkts in den jeweils aufgenommenen Kamerabildern sowie Abweichungen dieser Positionen vom Zielachsen-Bildpunkt in den jeweiligen Kamerabildern bestimmt werden. Das Ändern der Ausrichtung der Anzieleinrichtung erfolgt dann iterativ derart, dass schliesslich die Position des Hauptpunkts des gematchten Zielmarkenmusters auf die Zielachsenposition im Bild fällt.

Zur Unterstützung/Beschleunigung des iterativen Annäherungsprozesses oder alternativ zum direkten motorisierten Anfahren des Zielpunkts mit der Anvisiereinrichtung derart, dass die Zielachse auf diesen hochpräzise ausgerichtet ist, kann auch die Position des Hauptpunkts im Kamerabild sowie eine Abweichung dieser Position von der Zielachsenposition im Kamerabild direkt bestimmt und daraus ein Winkeloffset abgeleitet werden, welcher die Zielachse von einem auf den Zielpunkt ausgerichtet Sein trennt. Aus diesem Winkeloffset können nun direkt der Horizontal- und Vertikalwinkel ermittelt werden, um welche die Anvisiereinrichtung motorisiert zu drehen ist, damit die optische Zielachse hochpräzise auf den Zielpunkt ausgerichtet ist. Nach erfolgter dementsprechender Ausrichtungsänderung um die ermittelten Horizontal- und Vertikalwinkel kann nun noch eine Überprüfung erfolgen, indem ein weiteres Kamerabild der Zielmarke aufgenommen wird, wiederum das Zielmarkenmuster mit der Zielmarke in diesem Kamerabild durch Bildverarbeitung in Übereinstimmung gebracht wird und kontrolliert wird, ob nun die Position des Hauptpunkts des gematchten Zielmarkenmusters im Kamerabild hinreichend genau auf die Zielachsenposition fällt. Ggf. kann ein neuerliches Anpassen der Anvisiereinrichtungsausrichtung basierend auf einen Versatz zwischen der Position des Hauptpunkts und der Zielachsenposition erfolgen.

Alternativ kann der Winkeloffset (der aus einer Abweichung der Position des Hauptpunkts im Kamerabild von der Zielachsenposition im Kamerabild abgeleitet wird) auch direkt zu dem - anhand der Winkelsensoren des Vermessungsgeräts erfassten - Zielachsen-Winkel, in welchen die Zielachse zeigt, entsprechend addiert werden und somit der gesuchte Raumwinkel zum Zielpunkt ermittelt werden. In diesem Fall kann also der gesuchte Raum-Winkel zum Zielpunkt auch direkt aus dem - anhand der Winkelsensoren erfassten - aktuellen Zielachsen-Winkel und einer Rest-Abweichung der Position des Hauptpunkts im Kamerabild von der Zielachsenposition im Kamerabild (z.B. vom KameraSensor-Zentrum) bestimmt werden, ohne die Ausrichtung der Ziel-Achse - sich weiter dem Zielpunkt nähernd - aktiv zu ändern.

Zur Bestimmung der Position des Hauptpunkts des gematchten Zielmarkenmusters im Bild sowie zur Bestimmung eines Versatzes der Position des Hauptpunkts von der Zielachsenposition können sämtliche dafür geeignete und aus dem Stand der Technik bereits hinlänglich bekannte Verfahren der Bildauswertung verwendet werden, wie rein beispielhaft etwa in der WO 2005/026767 beschrieben.

Im Rahmen der erfindungsgemässen Anzielfunktion unter Zuhilfenahme der in die Anvisiereinrichtung integrierten Kamera ist es nun sogar möglich, dass die Position des Hauptpunkts des gematchtem Zielmarkenmusters im Kamerabild mit einer höheren Genauigkeit als der pixeldefinierten Auflösung des Kamerasensors bestimmt wird und das Ändern der Ausrichtung der Anzieleinrichtung derart erfolgt, dass die Position des Hauptpunkts und die Zielachsenposition mit einer höheren Genauigkeit als der pixeldefinierten Auflösung des Kamerasensors entsprechend aufeinander fallen. Eine solche verbesserte Genauigkeit ist beispielsweise dann erreichbar, wenn der Hauptpunkt des Zielmarkenmusters einer Markierung, beispielsweise einem Punkt in der geometrischen Mitte auf dem bekannten Zielmuster entspricht, so dass die Lage des Hauptpunkts im Kamerabild als geometrisches Mittel der Pixelwerte für die Berandung der Zielmarke im Kamerabild bestimmbar ist.

Als Zielmarkenmuster kann z.B. eine Zielmarkenschablone gespeichert sein. Wie zuvor erwähnt ist gemäss eines Aspekts der Erfindung ein Satz von unterschiedlichen, jeweils einen Zielpunkt hochpräzise definierenden Zielmarken bekannt, für die jeweils korrespondierende Zielmarkenmuster in einer Zielmarkenmusterdatenbank in den Auswertemitteln gespeichert sind. Dabei ist es vorteilhaft, wenn durch den Benutzer des Vermessungsgeräts die jeweils verwendete Zielmarke auswählbar und das dementsprechende Zielmarkenmuster für die Zielpunkt-Anzielfunktionalität aus der Zielmarkenmusterdatenbank aufrufbar ist. Alternativ kann die Wahl des - der im Feld verwendeten Zielmarke entsprechenden - Zielmarkenmusters aus der Datenbank auch automatisch erfolgen, beispielsweise im Fall einer aktiven Zielmarke (d.h. einer Zielmarke, die ihre Identität z.B. per Funk oder optisch an das Vermessungsgerät übermittelt) oder mittels vorgängiger oder paralleler Identifikation durch das Vermessungsgerät selbst (z.B. durch Zielmarken-Erkennung im aufgenommenen Kamerabild durch Bildverarbeitung, insbesondere falls die Zielmarke zu diesem Zweck ein Erkennungsmerkmal wie etwa einen Barcode trägt).

In einer besonderen Ausführungsform sind die Auswertemittel zur Ausführung der automatischen Zielpunkt-Anzielfunktionalität derart ausgebildet, dass vor dem Schritt des Matchens eine Skalierung des gespeicherten und zu matchenden Zielmarkenmusters in Abhängigkeit von einer bekannten, geschätzten und/oder zumindest grob bestimmten Entfernung zur Zielmarke erfolgt. Dieses kann insbesondere in Abhängigkeit von einer aktuellen Fokusposition eines im Strahlengang zwischen der Objektiveinheit und dem Kamerasensor angeordneten Fokussierglieds der Anzieleinrichtung geschehen.

In einer anderen, mit der vorangehend beschriebenen Ausführungsform auch kombinierbaren Ausgestaltung sind die Auswertemittel derart ausgebildet, dass nach dem Schritt des Matchens eine Skalierung des mit der Zielmarke im Kamerabild in Übereinstimmung gebrachten Zielmarkenmusters zur Bestimmung einer Entfernung zur Zielmarke herangezogen wird.

In einer weiteren, ebenfalls kombinierbaren Ausführungsform sind die Auswertemittel so gestaltet, dass vor dem Schritt des Matchens (d.h. dem Schritt des in Übereinstimmung Bringens) eine Anpassung - insbesondere Drehung und/oder Verzerrung - des zu matchenden Zielmarkenmusters in Abhängigkeit von einer bekannten, geschätzten und/oder zumindest grob bestimmten Orientierung der Zielmarke im Raum erfolgt.

Die Auswertemittel können auch so gestaltet sein, dass nach dem Matchen eine Drehung und/oder Verzerrung des mit der Zielmarke im Kamerabild in Übereinstimmung gebrachten Zielmarkenmusters zur Bestimmung einer Orientierung der Zielmarke im Raum herangezogen wird. Dabei können insbesondere eine horizontale Ausrichtung und/oder eine Neigung der Zielmarke bestimmt werden.

Es wird bevorzugt, dass das erfindungsgemässe geodätische Vermessungsgerät ausser der in die Anvisiereinrichtung integrierten und insbesondere koaxial zur optischen Achse angeordneten Kamera (sog. On-Axis-Kamera) auch mit einer Überblickskamera zur Erfassung eines Übersichtsbildes (sog. Overview-Kamera) ausgestattet ist.

Die On-Axis-Kamera und die Overview-Kamera können als Digitalkamera ausgebildet sein, beispielsweise als CMOS- oder CCD-Flächenarray und sensitiv zumindest im sichtbaren Spektralbereich, aufweisend eine Auflösung von z.B. etwa 2 bis 5 Millionen Pixeln. Da die On-Axis-Kamera dem vielfach vergrössernd wirkenden Objektiv der Anvisiereinrichtung (mit z.B. 30-fachem optischem Fixzoom) nachgeordnet ist, hat diese Kamera ein verhältnismässig eng eingeschränktes Sichtfeld, wohingegen die - z.B. auf die Anvisiereinrichtung aufgesetzte oder dieser übergeordnete - Overview-Kamera mit eigenem Objektiv (insbesondere ohne optischer Vergrösserungswirkung) ein breites Sichtfeld aufweist und - wie aus dem Stand der Technik bekannt - dem Benutzer zum einfachen Auffinden eines Ziels dient (z.B. wenn das durch diese Overview-Kamera erfasste Live-Bild auf einem Datenlogger angezeigt wird).

Das erfindungsgemässe geodätische Vermessungsgerät umfasst vorzugsweise mindestens eine Vorrichtung für eine elektronische Distanzmessung und/oder einen horizontalen Winkelsensor und/oder einen vertikalen Winkelsensor.

Ein weiterer Gegenstand der Erfindung ist ein System aus einem geodätischen Vermessungsgerät - nach einer der vorgenannten Ausführungsformen - mit einer automatischen Zielpunkt-Anzielfunktionalität zur hochpräzisen Positionsbestimmung eines Ziels und einem oder mehrere Zielmarken, welche jeweils einen oder mehrere Zielpunkte definieren.

Vorteilhaft können die eine oder die mehreren Zielmarken mit einem zusätzlichen Identifizierungskennzeichen oder -merkmal, z.B. einem Barcode, versehen sein. Dabei wird weiter bevorzugt, dass zusammen mit den korrespondierenden Zielmarkenmustern in einer Zielmarkenmusterdatenbank die Identifizierungskennzeichen korrespondierende Bibliothekselemente gespeichert sind.

Wie aus dem Stand der Technik für Prismen als Zielmarken bekannt, kann im Rahmen des Identifizierungskennzeichens oder -merkmals (z.B. dem Barcode) auch Zusatzinformation - auf eine anhand von Bildverarbeitung auslesbare Weise - gespeichert sein, wie Messanweisungen (z.B. die Anweisung, dass ein Ziel zehn mal zu vermessen ist), Reflektorhöhe, Informationen zum Hauptpunkt des Zielmusters, etc. Zudem kann das Identifizierungskennzeichen so ausgebildet sein, dass entweder nur ein entsprechender Typus der Zielmarke indiziert wird oder aber eine eindeutige Identifizierung auslesbar ist (etwa eine nur einmal in der Messumgebung vorkommende Ziel-Kennungsnummer). Jedoch können anhand des Identifizierungskennzeichens auch Typus der Zielmarke und eine eindeutige Kennungsnummer indiziert sein.

Ausserdem können nun eine oder mehrere Zielmarken retroreflektorlos ausgebildet sein, d.h. dass auf aufwändig herzustellende retrorefelktierende Elemente erfindungsgemäss verzichtet werden kann.

Ein weiterer Gegenstand der Erfindung ist ein Verfahren für eine automatische Zielpunktanzielung mittels eines vorangehend beschriebenen erfindungsgemässen Systems. Dabei ist gemäss eines erfindungsgemässen Aspekts ein Satz von unterschiedlichen, jeweils einen Zielpunkt hochpräzise definierenden Zielmarken bekannt, für die jeweils mit der äusseren Gestalt der jeweiligen Zielmarke korrespondierende Zielmarkenmuster in einer Zielmarkenmusterdatenbank in den Auswertemitteln gespeichert sind, wobei jeweils ein Hauptpunkt des Zielmarkenmusters als den jeweiligen Zielpunkt indizierend definiert ist.

In einem ersten Verfahrensschritt wird eine bekannte Zielmarke, welche einen Zielpunkt definiert, aus dem Satz von bekannten Zielmarken ausgewählt und auf ein Objekt mit einem zu beobachtenden Ziel aufgebracht. Dann wird die Anzielvorrichtung auf die Zielmarke ausgerichtet und ein Kamerabild der anvisierten Zielmarke mit dem Kamerasensor aufgenommen. Optional kann das Kamerabild mittels der Auswertemittel gespeichert werden.

Weiter kennzeichnend für das erfindungsgemässe Verfahren ist, dass nun vermessungsgerätseitig das der jeweils verwendeten Zielmarke entsprechende Zielmarkenmuster automatisch oder durch den Benutzer des Vermessungsgeräts ausgewählt und aus der Zielmarkenmusterdatenbank aufgerufen wird. Das aufgerufene Zielmarkenmuster wird mit der Zielmarke im Kamerabild durch Bildverarbeitung gematcht, insbesondere beispielsweise durch Überlagerung in Übereinstimmung gebracht. Ausserdem wird die Ausrichtung der Anzieleinrichtung abhängig von einer Position des Hauptpunkts im Kamerabild in gematchtem Zustand des Zielmarkenmusters derart motorisiert geändert, bis die optische Zielachse hochpräzise auf den Zielpunkt ausgerichtet ist. Dieses kann gegebenenfalls iterativ unter Wiederholung der Schritte von Bildaufnahme, Matchen und Änderns der Ausrichtung der Anzielvorrichtung erfolgen.

In einer Weiterbildung des erfindungsgemässen Verfahrens wird vor dem Schritt der Aufnahme eines Kamerabildes mit dem Kamerasensor ein Überblicksbild mit dem Überblicksdetektor aufgenommen, um eine Position einer Abbildung der Zielmarke in dem Überblicksbild zu bestimmen.

Eine mögliche Ausführungsform zeichnet sich dadurch aus, dass mithilfe der Auswertemittel vor dem Schritt des Matchens eine Skalierung des zu matchenden Zielmarkenmusters in Abhängigkeit von einer bekannten, geschätzten und/oder zumindest grob bestimmten Entfernung zur Zielmarke erfolgt. Dieses kann insbesondere in Abhängigkeit von einer aktuellen Fokusposition eines im Strahlengang zwischen der Objektiveinheit und dem Kamerasensor angeordneten Fokussierglieds der Anzieleinrichtung geschehen.

In einer anderen, mit der vorgenannten Ausführungsform kompatiblen Variante wird mithilfe der Auswertemittel nach dem Matchen eine Skalierung des mit der Zielmarke im Kamerabild in Übereinstimmung gebrachten Zielmarkenmusters zur Bestimmung einer Entfernung zur Zielmarke herangezogen.

In einer weiteren, ebenfalls kompatiblen Ausführungsform wird vor dem Schritt des Matchens eine Anpassung, insbesondere Drehung und/oder Verzerrung, des zu matchenden Zielmarkenmusters in Abhängigkeit von einer bekannten, geschätzten und/oder zumindest grob bestimmten Orientierung der Zielmarke im Raum vorgenommen.

Alternativ oder zusätzlich kann mithilfe der Auswertemittel nach dem Matchen eine Drehung und/oder Verzerrung des mit der Zielmarke im Kamerabild gematchten Zielmarkenmusters zur Bestimmung einer Orientierung der Zielmarke im Raum herangezogen, insbesondere eine horizontale Ausrichtung und eine Neigung der Zielmarke bestimmt werden.

Ein weiterer Gegenstand der Erfindung ist ein Computerprogrammprodukt mit Programmcode, der auf einem maschinenlesbaren Träger gespeichert ist, zur Durchführung
- des automatisch oder durch Abfrage und Erhalt einer Benutzereingabe erfolgenden Auswählens des der jeweils verwendeten Zielmarke entsprechenden Zielmarkenmusters und des Aufrufens des Zielmarkenmusters aus der Zielmarkenmusterdatenbank, sowie
- der zum hochpräzisen Anzielen des durch die Zielmarke angegebenen Zielpunkts erfolgenden Schritte des erfindungsgemässen vorgenannten Verfahrens. Dafür enthält der Programmcode eine Zielmarkenmusterdatenbank aus unterschiedlichen Zielmarkenmustern, wobei die Zielmarkenmuster jeweils mit der äusseren Gestalt von unterschiedlichen bekannten, jeweils einen Zielpunkt hochpräzise definierenden Zielmarken korrespondieren und jeweils ein Hauptpunkt der jeweiligen Zielmarkenmuster als den jeweiligen Zielpunkt indizierend definiert ist.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: ein als Totalstation ausgebildetes erfindungsgemässes geodätisches Vermessungsgerät;
- Fig. 2: eine erste Ausführungsform eines optischen Aufbaus einer Anzieleinrichtung eines erfindungsgemässen geodätischen Vermessungsgeräts;
- Fig. 3: eine zweite Ausführungsform eines optischen Aufbaus einer Anzieleinrichtung eines erfindungsgemässen geodätischen Vermessungsgeräts;
- Fig. 4a-6b: Beispiele für verschiedene Ausführungsformen von Zielmarken und Zielmarkenmustern;
- Fig. 7a-f: ein erstes Beispiel für das Matchen der Abbildung einer Zielmarke in einem Kamerabild mit einem gespeicherten Zielmarkenmuster;
- Fig. 8a-e: ein zweites Beispiel für das Matchen der Abbildung einer Zielmarke in einem Kamerabild mit einem gespeicherten Zielmarkenmuster, wobei eine Verdrehung der Zielmarke relativ zu einem Betrachter berücksichtigt wird;
- Fig. 9a-e: ein weiteres Beispiel für das Matchen der Abbildung einer Zielmarke in einem Kamerabild mit einem gespeicherten Zielmarkenmuster, wobei zusätzlich eine Längenskalierung vorgenommen wird.

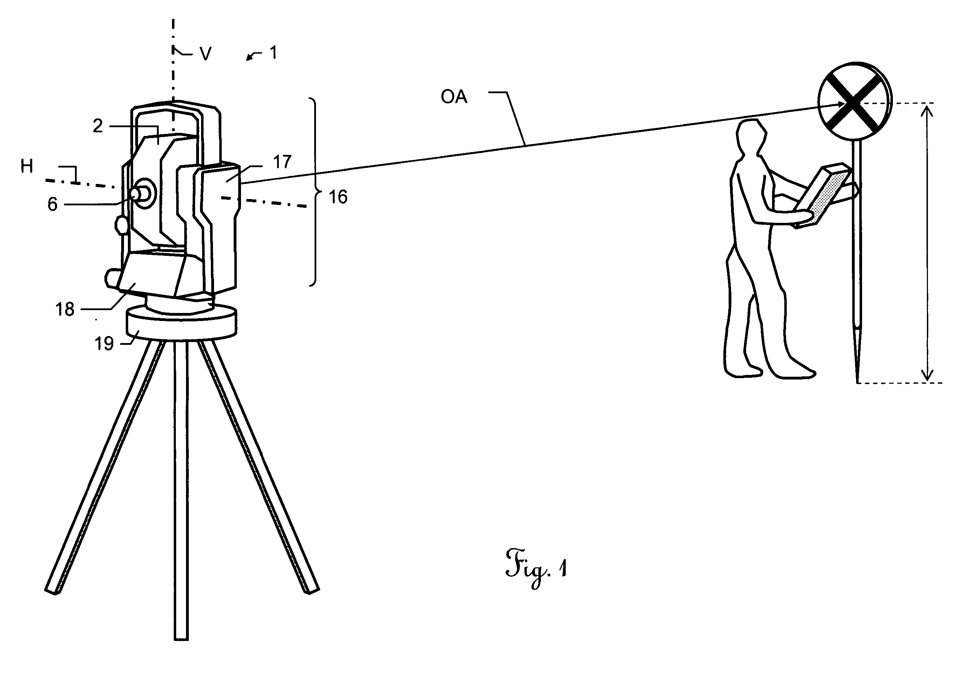

Figur 1 zeigt ein erfindungsgemässes, als Totalstation ausgebildetes geodätisches Vermessungsgerät 1 zur Messung von Horizontalwinkeln, Vertikalwinkeln und Distanzen zu einem beabstandeten Zielobjekt.

Die Totalstation ist auf einem Stativ angeordnet, wobei eine Basis 19 der Totalstation direkt und fest mit dem Stativ verbunden ist. Der Hauptkörper der Totalstation, der auch als Oberteil 16 bezeichnet wird, ist relativ zur Basis 19 um eine vertikale Stehachse V drehbar.

Das Oberteil 16 weist dabei eine - z.B. durch zwei Säulen gebildete - Stütze 17, eine zwischen den Säulen um die horizontale Kippachse H drehbar gelagerte Anvisiereinrichtung 2 sowie eine elektronische Anzeige-Steuereinheit 18 auf. Die Anzeige-Steuereinheit 18 kann in bekannter Weise zur Steuerung des Vermessungsgeräts 1 sowie zur Verarbeitung, Anzeige und Speicherung von Messdaten ausgebildet sein.

Die Anziel- oder Anvisiereinrichtung 2 ist an der Stütze 17 um eine horizontale Kippachse H drehbar angeordnet und kann somit zur Ausrichtung auf ein Zielobjekt relativ zur Basis 19 horizontal und vertikal geschwenkt bzw. gekippt werden. Dabei ist die Visiereinrichtung als eine gemeinsame Visiereinrichtungs-Baueinheit ausgeführt, wobei zumindest ein Objektiv, eine Fokussieroptik, ein koaxialer Kamerasensor, die erfindungsgemässe Mini-Anzeigekomponente, das Okular 6 sowie insbesondere ein Grafikprozessor in einem gemeinsamen Visiereinrichtungs-Gehäuse integriert sind.

Mittels der Anvisiereinrichtung 2 kann das Zielobjekt angezielt werden (d.h. die Zielachse der Anvisiereinrichtung 2 auf den Zielpunkt der Zielmarke ausgerichtet werden) und die Entfernung von der Totalstation zum Zielobjekt elektrosensorisch erfasst werden. Weiters sind Mittel zum elektrosensorischen Erfassen der Winkelausrichtung des Oberteils 16 relativ zur Basis 19 und der Visiereinrichtung 2 relativ zur Stütze 17 vorgesehen. Diese elektrosensorisch erfassten Messdaten werden der Anzeige-Steuereinheit 18 zugeführt und von dieser verarbeitet, so dass die Position des Zielpunkts relativ zur Totalstation durch die Anzeige-Steuereinheit 18 ermittelbar, optisch anzeigbar und speicherbar ist.

Im Rahmen der Erfindung kann dabei nun der Vorgang des feinen, hochpräzisen Anzielens des durch die Zielmarke definierten Zielpunkts des Zielobjekts erfindungsgemäss mittels der folgenden Schritte erfolgen, die im Rahmen der vorprogrammierten Anzielfunktion automatisch ablaufen:
□ Aufnehmen eines Kamerabilds der Zielmarke,
□ Matchen, insbesondere in Übereinstimmung Bringen, des Zielmarkenmusters mit der Zielmarke im Kamerabild durch Bildverarbeitung, und
□ motorisiertes Ändern der Ausrichtung der Anzieleinrichtung abhängig von einer ermittelten Position des im Kamerabild gematchten Zielmarkenmusters derart, dass die optische Zielachse (OA) hochpräzise auf den Zielpunkt ausgerichtet ist.

Dabei kann die erfindungsgemässe automatische FeinAnzielfunktion, die das in Figur 1 gezeigte Vermessungsgerät bereitstellt, auch gemäss den zuvor bereits beschriebenen Weiterbildungen bzw. speziellen Varianten vorprogrammiert ablaufen.

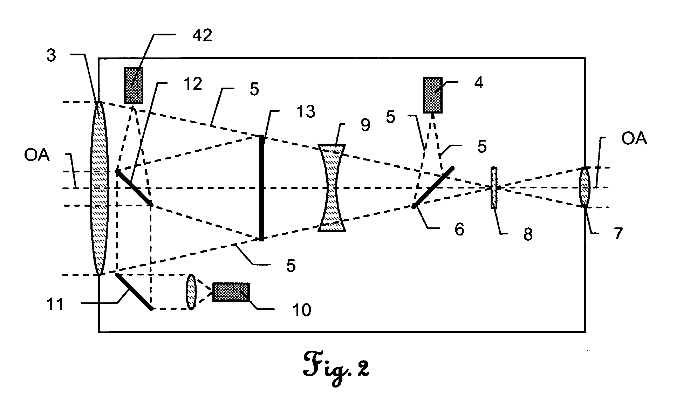

Figur 2 zeigt eine erste Ausführungsform eines optischen Aufbaus einer Anzieleinrichtung eines erfindungsgemässen geodätischen Vermessungsgeräts. Mittels einer Objektiveinheit 3 und dem zugehörigen Strahlengang von einem anzuvisierenden Ziel bzw. Objekt durch die Objektiveinheit 3 wird eine optische Zielachse OA definiert, die auf das zu beobachtende Ziel oder Objekt auszurichten ist. Die Objektiveinheit 3 kann mehrlinsig aufgebaut sein.

Ein Kamerasensor 4 mit pixeldefinierter Auflösung dient zur Erfassung eines Kamerabildes eines anzuvisierenden Objekts, Ziels bzw. einer Zielmarke.

Von der Objektiveinheit 3 zum Kamerasensor 4 erstreckt sich ein Strahlengang 5, der mit einem optischen Umlenkelement 6 gefaltet sein kann, wie in Figur 1 dargestellt, oder durchgehend geradlinig ausgebildet sein kann, wie in Figur 2 dargestellt. Das optische Umlenkelement 6 kann beispielsweise als ein Strahlteiler oder teildurchlässiger Spiegel ausgebildet sein, so dass ein Teil, z.B. 50%, des in dem Strahlengang 5 bis zu dem Umlenkelement 6 geführten Lichts auf den Kamerasensor 4 geleitet wird und sich ein anderer Teil weiter in Richtung der Zielachse zu einer Okulareinheit 7 für einen Beobachter ausbreiten kann. In Ausbreitungsrichtung des von der Objektiveinheit 3 erfassten Lichts kann vor dem Okular eine Justier- bzw. Ausrichtungshilfe 8, beispielsweise ein Fadenkreuz, angeordnet sein. Ausserdem kann im Strahlengang zwischen der Objektiveinheit 3 und dem optischen Umlenkelement 6 ein in seiner Positionierung längs der Achse OA veränderliches Fokussierglied 9 zur Veränderung der Fokussierposition für das von der Objektiveinheit 3 erfasste Licht angeordnet sein. Das Fokussierglied 9 kann mehrlinsig ausgebildet sein. Vorteilhaft ist für das Fokussierglied 9 eine stabile, präzise reproduzierbare Positionierung für Bilderfassung von in grosser Entfernung angeordneten Objekten mit einem de facto parallelen Strahlengang zur Objektiveinheit 3 vorgesehen.

Optional kann die Anordnung zusätzlich mit Mitteln für eine elektro-optische Distanzmessung ausgestattet sein. Dazu kann, wie in Figur 1 dargestellt, eine Messstrahlungsquelle 10 (z.B. emittierend im nahen infraroten, für das menschliche Auge nicht sichtbaren Spektralbereich) verwendet werden, deren Messstrahlung über ein optisches Umlenkelement 11, beispielsweise einen Spiegel, auf ein weiteres optisches Umlenkelement 12, beispielsweise einen im Spektralbereich der Lichtquelle 10 reflektierenden und im übrigen Spektralbereich transmittierenden dichroitischen Strahlteiler, und von dort weiter durch die Objektiveinheit 3 zu einer anzuvisierenden Zielmarke gelenkt wird. In dieser optionalen Ausführungsform eines optischen Aufbaus einer Anzieleinrichtung des erfindungsgemässen geodätischen Vermessungsgeräts passiert ein Teil des am Ziel diffus oder gerichtet reflektierten und von der Objektiveinheit 3 erfassten Lichts mit der Wellenlänge der Lichtquelle 10 das Umlenkelement 12 und breitet sich weiter aus bis zu einem dichroitischen Strahlauskoppler 13, der reflektierend für Licht der Emissionswellenlänge der Lichtquelle 10 und transmittierend für Licht des übrigen Spektralbereichs ausgebildet ist. Das von dem dichroitischen Strahlauskoppler 13 zurückgeworfene Messlicht wird über das Umlenkelement zu einem Detektor 42 für eine elektro-optische Distanzmessung geleitet. Beispielsweise kann die Lichtquelle 10 gepulst sein und die Distanzmessung in bekannter Weise durch Bestimmung von Pulslaufzeiten oder Phasendifferenzen zwischen emittiertem und reflektiertem Licht erfolgen.

Wie aus dem Stand der Technik bekannt und zuvor in der Beschreibungseinleitung detailliert ausgeführt, kann auch das erfindungsgemässe Vermessungsgerät ferner über eine für den Gebrauch zusammen mit Retroreflektoren als Ziele ausgelegte ATR-Feinanziel-Funktionalität verfügen, wofür in der Anzieleinrichtung zusätzlich dafür ausgelegte Komponenten (wie ATR-Lichtquelle und ATR-Detektor, sowie entsprechende strahlführende optischen Elemente) vorhanden sein können (zum Zwecke des einfacheren Verständnisses des Kerns der Erfindung sind diese nicht dargestellt).

Eine alternative, zweite Ausführungsform eines optischen Aufbaus einer Anzieleinrichtung eines erfindungsgemässen geodätischen Vermessungsgeräts ist in Figur 2 dargestellt. Im Wesentlichen unterscheidet sich diese Anordnung von der Konfiguration gemäss Figur 1 darin, dass der Strahlengang 5 zu dem Kamerasensor 4 nicht über ein optisches Umlenkelement 3 gefaltet ist, sondern der Kamerasensor 4 auf der optischen Zielachse OA angeordnet ist. Der Strahlengang von der Objektiveinheit längs der optischen Zielachse OA wird in dieser Anordnung mit dem Kamerasensor 4 beendet. In Figur 2 ist angedeutet, dass der Kamerasensor 4 mit Auswertemitteln 50 verbunden ist. Von diesen Auswertemitteln 50 kann das aktuell erfasste Bild des Kamerasensors, gegebenenfalls mit überlagerten Zielmarkenmustern, auf ein Display 20 ausgegeben werden, gegebenenfalls so, dass einem Betrachter ein Eindruck vermittelt wird, als würde er durch das Okular 7 eine direkte "Fernrohr-Abbildung" eines betrachteten Objekts, Ziels oder Zielmusters sehen.

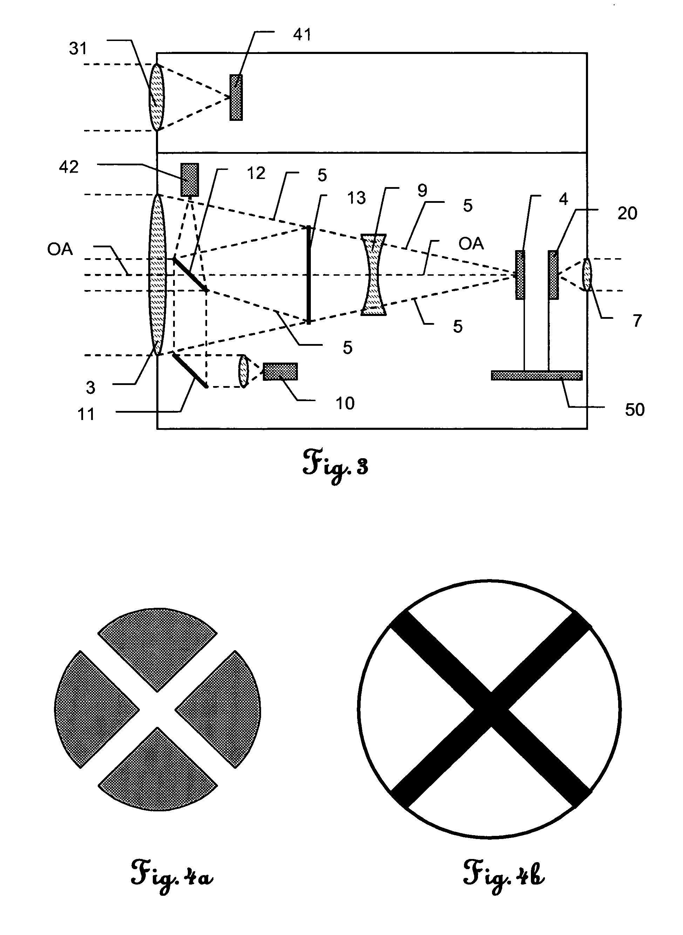

Die in Figur 3 dargestellte Anordnung umfasst zusätzlich eine zweite Objektiveinheit 31 und einen Überblicksdetektor 41 zur Erfassung eines Überblicksbildes. Vorzugsweise ist der Überblicksdetektor 41 ebenfalls mit den Auswertemitteln 50 verbunden (in Figur 2 nicht angedeutet). Im Gegensatz zur On-Axis-Kamera 4, die dem vielfach vergrössernd wirkenden Objektiv 3 (z.B. 30x-Zoom) der Anzieleinrichtung nachgeordnet ist und somit ein verhältnismässig enges Sichtfeld aufweist, kann die Objektiveinheit 31 dabei so ausgebildet sein, dass kein oder ein sehr geringer Vergrösserungsfaktor bewirkt wird und somit die Überblickskamera 41 (Overview-Kamera) ein vergleichsweise weites Sichtfeld abdeckt.

Auch die Anordnung gemäss Figur 2 kann mit einer solchen Vorrichtung zur Erfassung eines Überblicksbildes ausgestattet sein.

Zur Unterstützung/Weiterbildung des automatisierten Anzielprozesses kann erfindungsgemäss dabei zusätzlich eine - vor der Fein-Anzielung erfolgende - automatische Grob-Anzielfunktionalität bereitgestellt sein. Diese Funktion kann insbesondere dann zum Einsatz kommen, wenn sich die Zielmarke noch nicht im verhältnismässig engen Sichtfeldbereich der On-Axis-Kamera befindet. In diesem Fall kann ein Overview-Bild durch die - den vergleichsweise viel weiteren Sichtfeldbereich aufweisende - Überblickskamera 41 von der Zielmarke aufgenommen werden und anhand von Bildverarbeitung des Overview-Bilds eine grobe, automatisch motorisiert erfolgende Ausrichtung der Anzieleinrichtung auf die Zielmarke durchgeführt werden.

Insbesondere kann dafür eine ähnliche Prozedur erfolgen, die auch im Rahmen der erfindungsgemässen Fein-Anzielfunktionalität abläuft. D.h., nach Aufnahme des Overview-Bilds im Rahmen der optionalen Grob-Anzielfunktionalität kann ein Matchen der für die verwendete, bekannte Zielmarke gespeicherten Zielmarken-Schablone mit der im Overview-Bild aufgenommenen Zielmarke erfolgen und abhängig von der Position der Zielmarken-Schablone im Overview-Bild (in gematchtem Zustand der Schablone) kann dann automatisch abhängig von dieser Position die Anzieleinrichtung motorisiert zur Grob-Ausrichtung auf die Zielmarke verfahren werden. Die Grob-Anzielung sollte dabei nun zumindest mit einer derartigen Genauigkeit erfolgen, dass nach solcherart ausgeführter Grob-Ausrichtung der Anzieleinrichtung die Zielmarke sich im Sichtfeld der On-Axis-Kamera 4 befindet. Anschliessend kann automatisiert die Fein-Anzielung erfolgen. Insbesondere können dabei die Grob- und Fein-Anzielprozeduren auch initiiert durch einen einzigen Benutzerbefehl automatisch direkt nacheinander (d.h. automatisch aneinander anschliessend) erfolgen.

Es versteht sich zudem, dass auch die in Figur 3 gezeigte Ausführungsform zusätzlich entsprechende, aus dem Stand der Technik bekannte Komponenten (wie ATR-Lichtquelle und ATR-Detektor, sowie ggf. entsprechende strahlführende optische Elemente), die eine für Retroreflektoren ausgelegte ATR-Feinanziel-Funktionalität zur Verfügung stellen, aufweisen kann.

Die Figuren 4 bis 6 zeigen verschiedene mögliche Ausführungsformen von Zielmustern (jeweils rechts) und dazu als Zielmarkenmustern gespeicherte Zielmarkenschablonen (links), welche in diesen Ausführungsformen jeweils wie ein Negativ oder Komplementärbild zum zugehörigen Zielmuster ausgebildet sind. Es ist offensichtlich, dass es sich hier um rein beispielhafte, beliebig erweiterbare und ergänzbare Ausführungsformen handelt. Vorteilhaft ist, wenn auf der Zielmarke ein eindeutig identifizierbarer Zielpunkt, wie beispielsweise der Schnittpunkt eines Kreuzes, angegeben und im zugehörigen gespeicherten Zielmarkenmuster ein diesen Zielpunkt indizierender Hauptpunkt vordefiniert ist.

Die in den Figuren 4 bis 6 rein beispielhaft gezeigten Varianten können dabei selbstverständlich unter Heranziehung von aus dem Stand der Technik bekannten Aspekten für die Gestaltung von geeigneten Zielmarken - wie z.B. in der US 2009/0148037 beschrieben - angepasst werden.

Die nachfolgenden Figuren illustrieren die Prozesse des Matchens eines aufgenommenen Bilds einer Zielmarke mit einem gespeicherten Zielmarkenmuster und der anschliessenden Änderung der Ausrichtung der Anzielvorrichtung, bis die optische Zielachse auf den Zielpunkt ausgerichtet ist.

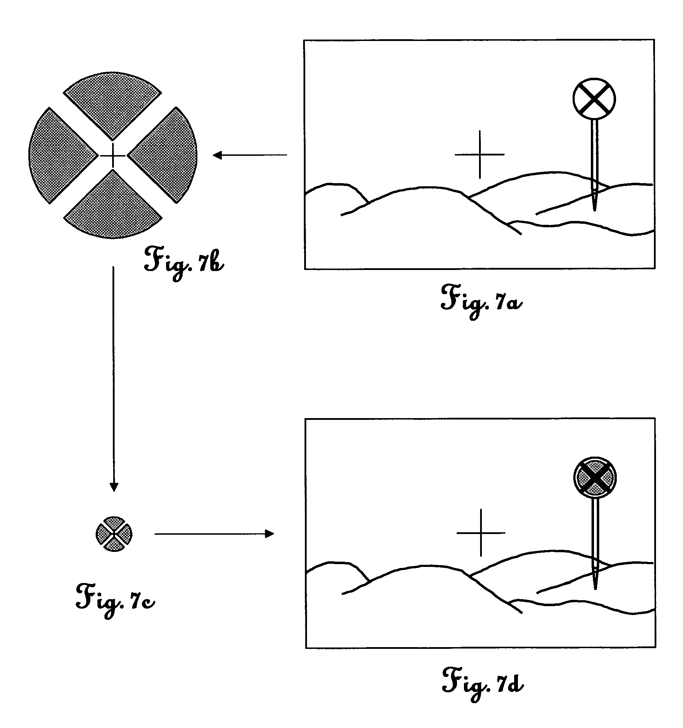

Figur 7a zeigt ein aufgenommenes Bild einer in einem Gelände positionierten Zielmarke. Das Fadenkreuz in der Bildmitte gibt die augenblickliche Ausrichtung der Anzielvorrichtung an.

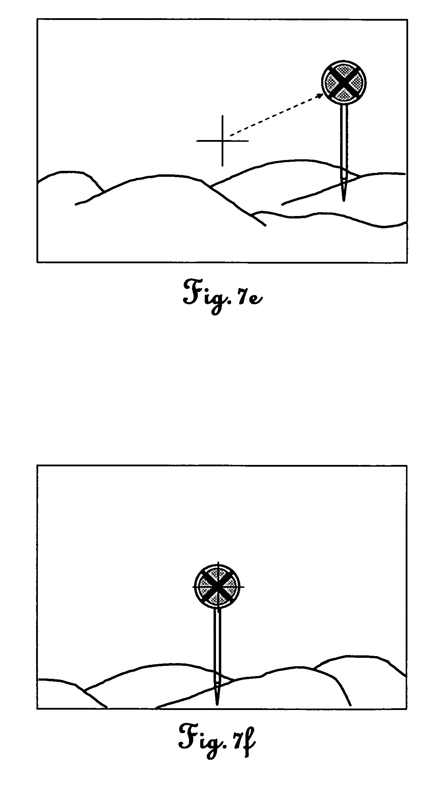

Figur 7b zeigt ein zugehöriges, als Zielmarkenschablone ausgebildetes Zielmarkenmuster, mit einem durch ein Kreuz in der Mitte angegebenen Hauptpunkt. Nachfolgend wird, wie in Figur 7c angedeutet, die Grösse des mit dem Kamerabild zu überlagernden Zielmarkenmusters auf die Grösse des aktuellen Bildes der Zielmarke skaliert und das skalierte Zielmarkenmuster mit der Abbildung der Zielmarke im Kamerabild zur Deckung gebracht (Figur 7d). In diesem Beispiel ist die Zielmarke sehr genau in Richtung des geodätischen Vermessungsgeräts ausgerichtet, entsprechend einer Frontalaufsicht, und nicht um eine Achse, definiert durch den stützenden vertikalen Lotstock, horizontal verdreht; denn Zielmuster und Bild der Zielmarke lassen sich genau zur Deckung bringen. An der unveränderten Position des Fadenkreuzes im Kamerabild ist erkennbar, dass bis dahin die Ausrichtung nicht verändert wurde. Figur 7e und 7f illustrieren, wie dann nachfolgend (motorisiert) die Ausrichtung der Anzieleinrichtung geändert wird, indem das Fadenkreuz mit dem Hauptpunkt des Zielmarkenmusters zur Deckung gebracht und damit die optische Zielachse hochpräzise auf den Zielpunkt auf der Zielmarke ausgerichtet wird. Mithilfe der Winkelmessfunktionalität des erfindungsgemässen geodätischen Vermessungsgeräts wird während des gesamten Vorgangs die Ausrichtung der Zielachse hochpräzise gemessen.

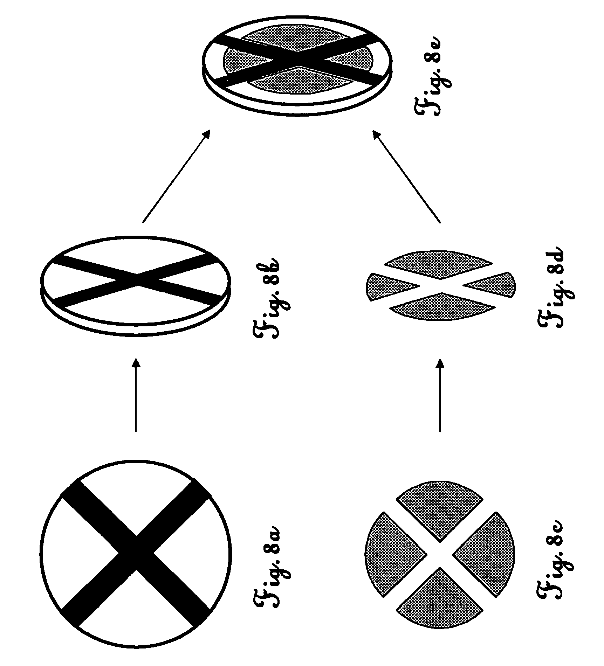

In Figur 8a bis 8e wird illustriert, wie eine Verdrehung der Zielmarke um eine horizontale Achse beim Matchen von Zielmarkenmuster und Kamerabild der Zielmarke kompensiert und die horizontale Ausrichtung der Zielmarke bestimmt werden können.

Figur 8a illustriert eine frontale Aufsicht auf eine kreisförmige Zielmarke, Figur 8c die Darstellung eines zugehörigen Zielmarkenmusters entsprechend frontaler Aufsicht. Die Muster sind punktsymmetrisch bezüglich ihrer geometrischen Mittelpunkte, und die schwarzen beziehungsweise weissen "Balken" sind gleich lang. Die Flächeninhalte der dazwischen liegenden Segmente sind gleich gross.

Figur 8b illustriert die Ansicht einer Zielmarke, wie sie sich bei einer Verdrehung (um eine vertikale Achse bei vertikaler Aufstellung der Zielmarke im Feld) relativ zu einem Beobachter präsentiert: Die linke Hälfte der Zielmarke befindet sich näher zum Beobachter als die rechte Hälfte, und daher erscheinen die näheren Balkenteile und Flächensegmente grösser als die hinteren. Dabei ist die Situation angenommen, dass keine Verdrehung oder Verkippung um eine im Feld horizontale Achse vorliegt, die zu zusätzlichen Verzerrungen der relativen Dimensionen führen würde. Aus den Quotienten der in ihrer Abbildung verzerrten Längen- und Flächenabmessungen von "vorderen" und "hinteren" Anteilen, insbesondere auch im Vergleich zu den entsprechenden Verhältnissen im "unverzerrten", d.h. nicht verdrehten Zustand (in diesem Beispiel 1:1) lassen sich mittels einfacher, bekannter geometrischer Betrachtungen und darauf beruhender Berechnungen die Abweichungen von der Ausrichtung entsprechend der Frontalansicht bestimmen. Um eine solche Abweichung entsprechend einer Frontalansicht der Zielmarke winkelbezogen mit hoher Genauigkeit zu bestimmen, wird das Zielmarkenmuster um eine virtuelle Achse gedreht, wobei sich seine entsprechenden Linien- und Flächenabmessungen in genau bekannter und berechenbarer Weise ändern (siehe Figur 8d), bis es exakt zur Deckung mit dem Bild der Zielmarke gebracht werden kann (siehe Figur 8e). In völlig analoger Weise kann auch eine Verdrehung oder Verkippung um eine horizontale Achse, oder eine Mischung bzw. Überlagerung von Verdrehungen um beide Achsen berücksichtigt und quantitativ mit hoher Genauigkeit bestimmt werden.

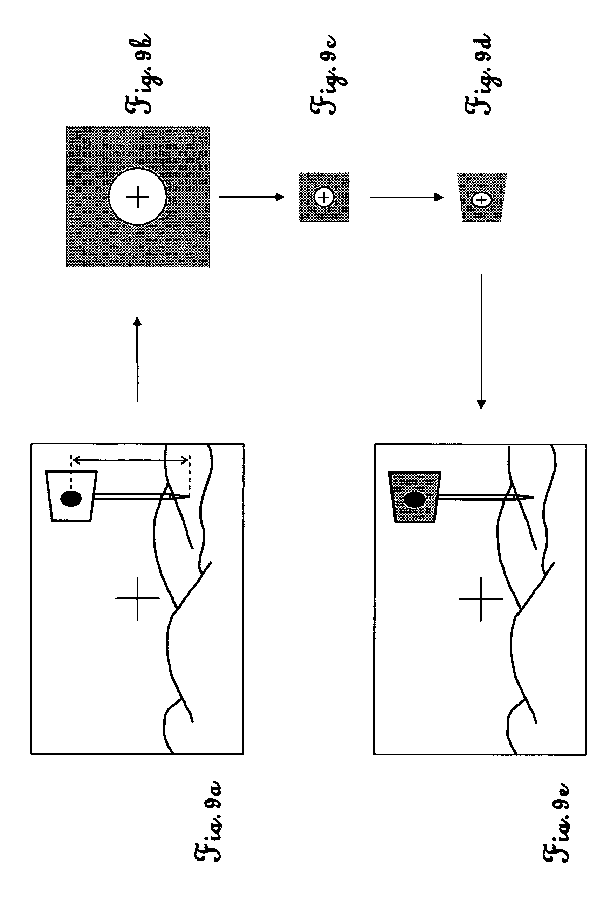

Figur 9a bis 9e zeigen ein ähnliches Ausführungsbeispiel mit einer im "unverdrehten" Zustand quadratischen Zielmarke, wobei zusätzlich auch noch Längsdimensionen von Objekten im gleichen Abstand wie die Zielmarke leicht bestimmt werden können.

Figur 9a zeigt die um eine vertikale Achse gegenüber einer Frontalansicht verdrehte Zielmarke, die auf einem Lotstock bekannter Länge montiert ist, mit bekanntem Abstand des Zielpunkts vom unteren Ende des Lotstocks.

Figur 9b zeigt ein geeignetes aus einer Zielmarkenmusterdatenbank abgerufenes Zielmarkenmuster mit einem darin in der geometrischen Mitte angegebenen Hauptpunkt.

Figur 9c illustriert, wie das Zielmarkenmuster in seiner Darstellung herunterskaliert wird, um es später mit dem aktuellen Bild der Zielmarke in Deckung bringen zu können.

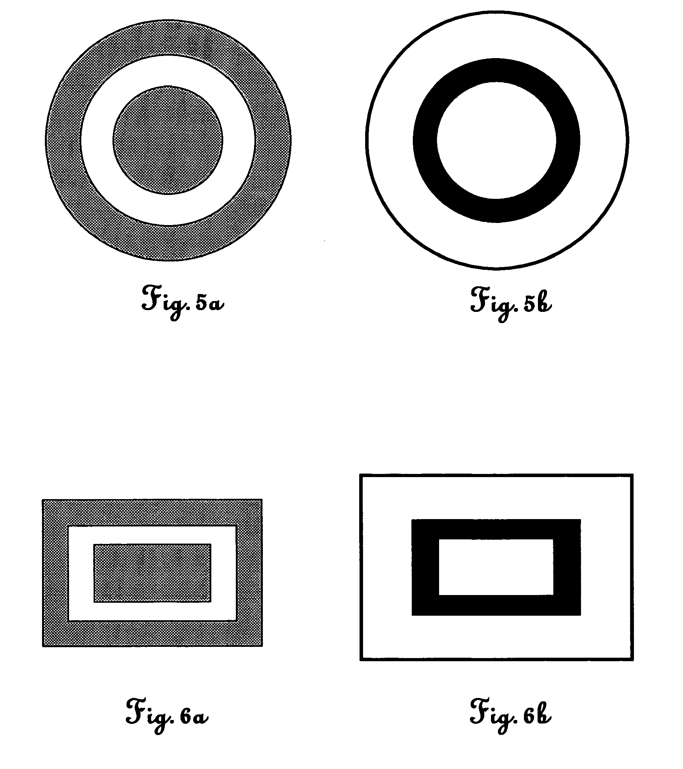

Dann wird das herunterskalierte Zielmarkenmuster wiederum um eine virtuelle Achse gedreht, um es dann mit dem aktuellen Bild der Zielmarke deckungsgleich zu überlagern. Danach wäre als abschliessender Schritt, wie zuvor bezüglich Figur 6e ausgeführt, die Ausrichtung der Anzieleinrichtung zu ändern, indem das Fadenkreuz mit dem Hauptpunkt des Zielmarkenmusters zur Deckung gebracht und damit die optische Zielachse hochpräzise auf den Zielpunkt auf der Zielmarke ausgerichtet wird. Dann ist es möglich, durch Skalierung mit dem bekannten Abstand des Zielpunkts der Zielmarke zum unteren Ende des Lotstocks die Abmessungen der im gleichen Abstand vom Beobachter befindlichen Objekte zu bestimmen.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

Unter dem Begriff "geodätisches Vermessungsgerät" soll im Rahmen der vorliegenden Erfindung verallgemeinernd stets ein Messinstrument verstanden werden, das über Vorrichtungen zur Messung oder Überprüfung von Daten mit räumlichem Bezug verfügt, insbesondere jedoch ein Theodolit oder eine Totalstation. Insbesondere betrifft dies die Messung von Entfernung und/oder Richtung bzw. Winkeln zu einem durch eine Zielmarke angegebenen Ziel- oder Messpunkt. Darüber hinaus können jedoch noch weitere Vorrichtungen, z.B. Komponenten zur satellitengestützten Ortsbestimmung (bspw. GPS, GLONASS oder GALILEO), vorhanden sein, die für ergänzende Messungen oder Datenaufnahmen verwendet werden können.

## Patentansprüche

1. Geodätisches Vermessungsgerät (1), insbesondere Theodolit oder Totalstation, zur Positionsbestimmung eines Zielpunkts, der durch eine bekannte Zielmarke mit dafür ausgelegter äusserer Gestalt im Raum hochpräzise angegeben wird,
mit
• einer Anzieleinrichtung, insbesondere Ziel-Fernrohr, wobei die Anzieleinrichtung gegenüber einer Basis des Vermessungsgeräts zur Änderung deren Ausrichtung motorisiert schwenkbar ist und zumindest aufweist
□ eine eine optische Zielachse (OA) definierende Objektiveinheit (3) und
□ einen Kamerasensor zur Erfassung eines Kamerabildes der anvisierten Zielmarke,
• Winkelmessfunktionalität zur hochpräzisen Erfassung der Ausrichtung der Zielachse, und
• Auswertemitteln (50) zur Bildverarbeitung, Datenspeicherung und Steuerung der Ausrichtung der Anzieleinrichtung,
**dadurch gekennzeichnet, dass**
• ein Satz von unterschiedlichen, jeweils einen Zielpunkt hochpräzise definierenden Zielmarken bekannt ist, für die jeweils mit der äusseren Gestalt der jeweiligen Zielmarke korrespondierende Zielmarkenmuster in einer Zielmarkenmusterdatenbank in den Auswertemitteln gespeichert sind, wobei jeweils ein Hauptpunkt des Zielmarkenmusters als den jeweiligen Zielpunkt indizierend definiert ist, wobei automatisch oder durch den Benutzer des Vermessungsgeräts das der jeweils verwendeten Zielmarke entsprechende Zielmarkenmuster für die Zielpunkt-Anzielfunktionalität auswählbar und aus der Zielmarkenmusterdatenbank aufrufbar ist, und
• die Auswertemittel (50) zur Ausführung einer automatischen Zielpunkt-Anzielfunktionalität derart ausgebildet sind, dass nach Funktionsstart automatisch folgende Schritte erfolgen
□ Aufnehmen eines Kamerabilds der Zielmarke,
□ Matchen, insbesondere in Übereinstimmung Bringen, des aufgerufenen Zielmarkenmusters mit der Zielmarke im Kamerabild durch Bildverarbeitung, und
□ motorisiertes Ändern der Ausrichtung der Anzieleinrichtung abhängig von einer Position des Hauptpunkts im Kamerabild in gematchtem Zustand des aufgerufenen Zielmarkenmusters derart, dass die optische Zielachse (OA) hochpräzise auf den Zielpunkt ausgerichtet ist.

2. Geodätisches Vermessungsgerät (1) nach Anspruch 1,
**dadurch gekennzeichnet, dass**
die Auswertemittel derart zur Ausführung der automatischen Zielpunkt-Anzielfunktionalität ausgebildet sind, dass zum hochpräzisen Ausrichten der optischen Zielachse auf den Zielpunkt die Schritte des Aufnehmens, Matchens und Änderns wiederholt erfolgen und das hochpräzise Ausrichten iterativ durch Annäherung erfolgt.

3. Geodätisches Vermessungsgerät (1) nach Anspruch 1 oder 2,
**dadurch gekennzeichnet, dass**
die Auswertemittel derart zur Ausführung der automatischen Zielpunkt-Anzielfunktionalität ausgebildet sind, dass
• nach dem Schritt des Matchens die Position des Hauptpunkts im Kamerabild sowie eine Abweichung dieser Position von einer Zielachsenposition im Kamerabild, welche dem durch die Zielachse angezielten Punkt im Kamerabild entspricht, bestimmt werden und
• das Ändern der Ausrichtung der Anzieleinrichtung derart iterativ erfolgt, dass die Position des Hauptpunkts und die Zielachsenposition aufeinander fallen.

4. Geodätisches Vermessungsgerät (1) nach Anspruch 3,
**dadurch gekennzeichnet, dass**
die Auswertemittel derart zur Ausführung der automatischen Zielpunkt-Anzielfunktionalität ausgebildet sind, dass die Position des Hauptpunkts im Kamerabild im Subpixelbereich bestimmt wird, d.h. mit einer höheren Genauigkeit als einer pixeldefinierten Auflösung des Kamerasensors, und das Ändern der Ausrichtung der Anzieleinrichtung derart erfolgt, dass die Position des Hauptpunkts und die Zielachsenposition im Subpixelbereich aufeinander fallen, d.h. mit einer höheren Genauigkeit als der pixeldefinierten Auflösung des Kamerasensors.

5. Geodätisches Vermessungsgerät (1) nach einem der Ansprüche 1 bis 4,
**dadurch gekennzeichnet, dass**
als Zielmarkenmuster eine Zielmarkenschablone gespeichert ist.

6. Geodätisches Vermessungsgerät (1) nach einem der Ansprüche 1 bis 5,
**dadurch gekennzeichnet, dass**
die Auswertemittel derart zur Ausführung der automatischen Zielpunkt-Anzielfunktionalität ausgebildet sind, dass vor dem Schritt des Matchens eine Skalierung des zu matchenden aufgerufenen Zielmarkenmusters in Abhängigkeit von einer bekannten, geschätzten und/oder zumindest grob bestimmten Entfernung zur Zielmarke erfolgt, insbesondere in Abhängigkeit einer aktuellen Fokusposition eines im Strahlgang zwischen der Objektiveinheit und dem Kamerasensor angeordneten Fokussierglieds der Anzieleinrichtung.

7. Geodätisches Vermessungsgerät (1) nach einem der Ansprüche 1 bis 6,
**dadurch gekennzeichnet, dass**
die Auswertemittel derart zur Ausführung der automatischen Zielpunkt-Anzielfunktionalität ausgebildet sind, dass nach dem Matchen eine Skalierung des mit der Zielmarke im Kamerabild gematchten Zielmarkenmusters zur Bestimmung einer Entfernung zur Zielmarke herangezogen wird.

8. Geodätisches Vermessungsgerät (1) nach einem der Ansprüche 1 bis 7,
**dadurch gekennzeichnet, dass**
die Auswertemittel derart zur Ausführung der automatischen Zielpunkt-Anzielfunktionalität ausgebildet sind, dass vor dem Schritt des Matchens eine Anpassung, insbesondere Drehung und/oder Verzerrung, des zu matchenden aufgerufenen Zielmarkenmusters in Abhängigkeit von einer bekannten, geschätzten und/oder zumindest grob bestimmten Orientierung der Zielmarke im Raum erfolgt.

9. Geodätisches Vermessungsgerät (1) nach einem der Ansprüche 1 bis 8,
**dadurch gekennzeichnet, dass**
die Auswertemittel derart zur Ausführung der automatischen Zielpunkt-Anzielfunktionalität ausgebildet sind, dass nach dem Matchen eine Drehung und/oder Verzerrung des mit der Zielmarke im Kamerabild gematchten Zielmarkenmusters zur Bestimmung einer Orientierung der Zielmarke im Raum herangezogen wird, insbesondere wobei eine horizontale Ausrichtung und eine Neigung der Zielmarke bestimmt wird.

10. Geodätisches Vermessungssystem (1) aus mindestens
• einem geodätischen Vermessungsgerät nach einem der Ansprüche 1 bis 9 zur Positionsbestimmung eines Zielpunkts und
• einer bekannten Zielmarke mit derart ausgelegter äusserer Gestalt, dass der Zielpunkt durch die Zielmarke im Raum hochpräzise angegeben wird.

11. Verfahren zum mit geodätischer Genauigkeit erfolgenden Positionsbestimmen eines Zielpunkts, der durch eine bekannte Zielmarke mit dafür ausgelegter äusserer Gestalt im Raum hochpräzise angegeben wird, unter Verwendung eines geodätischen Vermessungsgeräts (1) mit
• einer Anzieleinrichtung, insbesondere Ziel-Fernrohr, wobei die Anzieleinrichtung gegenüber einer Basis des Vermessungsgeräts zur Änderung deren Ausrichtung motorisiert schwenkbar ist und zumindest aufweist
□ eine eine optische Zielachse (OA) definierende Objektiveinheit (3) und
□ einen Kamerasensor zur Erfassung eines Kamerabildes der anvisierten Zielmarke,
• Winkelmessfunktionalität zur hochpräzisen Erfassung der Ausrichtung der Zielachse, und
• Auswertemitteln (50) zur Bildverarbeitung, Datenspeicherung und Steuerung der Ausrichtung der Anzieleinrichtung,
**dadurch gekennzeichnet, dass**
• ein Satz von unterschiedlichen, jeweils einen Zielpunkt hochpräzise definierenden Zielmarken bekannt ist, für die jeweils mit der äusseren Gestalt der jeweiligen Zielmarke korrespondierende Zielmarkenmuster in einer Zielmarkenmusterdatenbank in den Auswertemitteln gespeichert sind, wobei jeweils ein Hauptpunkt des Zielmarkenmusters als den jeweiligen Zielpunkt indizierend definiert ist,
• das der jeweils verwendeten Zielmarke entsprechende Zielmarkenmuster automatisch oder durch den Benutzer des Vermessungsgeräts ausgewählt und aus der Zielmarkenmusterdatenbank aufgerufen wird, und
• zum hochpräzisen Anzielen des durch die Zielmarke angegebenen Zielpunkts folgende Schritte erfolgen, insbesondere automatisch gesteuert durch die Auswertemittel (50):
□ Aufnehmen eines Kamerabilds der Zielmarke,
□ Matchen, insbesondere in Übereinstimmung Bringen, des aufgerufenen Zielmarkenmusters mit der Zielmarke im aufgenommenen Kamerabild durch Bildverarbeitung, und
□ motorisiertes Ändern der Ausrichtung der Anzieleinrichtung abhängig von einer Position des Hauptpunkts im Kamerabild in gematchtem Zustand des aufgerufenen Zielmarkenmusters derart, dass die optische Zielachse (OA) hochpräzise auf den Zielpunkt ausgerichtet ist.

12. Computerprogrammprodukt mit Programmcode, der auf einem maschinenlesbaren Träger gespeichert ist und eine Zielmarkenmusterdatenbank aus unterschiedlichen Zielmarkenmustern enthält, wobei die Zielmarkenmuster jeweils mit der äusseren Gestalt von unterschiedlichen bekannten, jeweils einen Zielpunkt hochpräzise definierenden Zielmarken korrespondieren und jeweils ein Hauptpunkt der jeweiligen Zielmarkenmuster als den jeweiligen Zielpunkt indizierend definiert ist,
zur Durchführung
• des automatisch oder durch Abfrage und Erhalt einer Benutzereingabe erfolgenden Auswählens des der jeweils verwendeten Zielmarke entsprechenden Zielmarkenmusters und des Aufrufens des Zielmarkenmusters aus der Zielmarkenmusterdatenbank, sowie
• der zum hochpräzisen Anzielen des durch die Zielmarke angegebenen Zielpunkts erfolgenden Schritte
des Verfahrens nach Anspruch 11, insbesondere wenn das Programm auf einer als Auswertemittel (50) des geodätischen Vermessungsgeräts (1) nach einem der Ansprüche 1 bis 10 ausgebildeten elektronischen Datenverarbeitungseinheit (16) ausgeführt wird.

## Claims

1. Geodetic measuring appliance (1), particularly a theodolite or total station, for determining the position of a target which is indicated with a high level of precision in space by a known target mark with an external form designed for this purpose,
having
• a targeting device, particularly a telescopic sight, wherein the targeting device can swivel in motorized fashion relative to a base of the measuring appliance in order to change the orientation thereof and has at least
○ an objective-lens unit (3) which defines an optical target axis (OA), and
○ a camera sensor for acquiring a camera image of the targeted target mark,
• angle-measuring functionality for the high-precision capture of the orientation of the target axis, and
• evaluation means (50) for image processing, data storage and control of the orientation of the targeting device,
**characterized in that**
• a set of different target marks, which each define a target with a high level of precision, is known, for each of which target mark samples corresponding to the external form of the respective target mark are stored in a target mark sample database in the evaluation means, wherein a respective main point in the target mark sample is defined as indicating the respective target point, wherein the target mark sample corresponding to the respective target mark used can be selected for the targeting functionality, and can be called from the target mark sample database, automatically or by the user of the measuring appliance, and
• the evaluation means (50) are designed to execute an automatic targeting functionality such that the start of the function is automatically followed by performance of the following steps:
○ taking a camera image of the target mark,
○ matching the called target mark sample to, in particular making the called target mark sample consistent with, the target mark in the camera image by means of image processing, and
○ changing in motorized fashion the orientation of the targeting device dependent on of a position of the main point in the camera image in the matched state of the called target mark sample such that the optical target axis (OA) is oriented with a high level of precision to the target point.

2. Geodetic measuring appliance (1) according to Claim 1,
**characterized in that**
the evaluation means are designed to execute the automatic targeting functionality such that the high-precision orientation of the optical target axis to the target point is effected by virtue of the steps of taking an image, matching and changing being effected repeatedly and the high-precision orientation being effected iteratively by convergence.

3. Geodetic measuring appliance (1) according to Claim 1 or 2,
**characterized in that**
the evaluation means are designed to execute the automatic targeting functionality such that
• the step of matching is followed by determination of the position of the main point in the camera image and of a deviation in this position from a target axis position in the camera image, which target axis position corresponds to the point in the camera image which the target axis targets, and
• the orientation of the targeting device is changed iteratively such that the position of the main point and the target axis position coincide.

4. Geodetic measuring appliance (1) according to Claim 3,
**characterized in that**
the evaluation means are designed to execute the automatic targeting functionality such that the position of the main point in the camera image is determined in the subpixel range, i.e. with a higher level of accuracy than a pixel-defined resolution of the camera sensor, and the orientation of the targeting device is changed such that the position of the main point and the target axis position coincide in the subpixel range, i.e. with a higher level of accuracy than the pixel-defined resolution of the camera sensor.

5. Geodetic measuring appliance (1) according to one of Claims 1 to 4,
**characterized in that**
the target mark sample stored is a target mark template.

6. Geodetic measuring appliance (1) according to one of Claims 1 to 5,
**characterized in that**
the evaluation means are designed to execute the automatic targeting functionality such that the step of matching is preceded by scaling of the called target mark sample that is to be matched being effected dependent on a known, estimated and/or at least roughly determined distance to the target mark, particularly dependent on a current focus position for a focusing element of the targeting device that is arranged in the beam path between the objective-lens unit and the camera sensor.

7. Geodetic measuring appliance (1) according to one of Claims 1 to 6,
**characterized in that**
the evaluation means are designed to execute the automatic targeting functionality such that the matching is followed by the use of scaling of the target mark sample matched to the target mark in the camera image in order to determine a distance to the target mark.

8. Geodetic measuring appliance (1) according to one of Claims 1 to 7, **characterized in that**
the evaluation means are designed to execute the automatic targeting functionality such that the step of matching is preceded by adjustment, particularly rotation and/or distortion, of the called target mark sample that is to be matched being effected dependent on a known, estimated and/or at least roughly determined orientation of the target mark in space.

9. Geodetic measuring appliance (1) according to one of Claims 1 to 8,
**characterized in that**
the evaluation means are designed to execute the automatic targeting functionality such that the matching is followed by the use of a rotation and/or distortion of the target mark sample matched to the target mark in the camera image in order to determine an orientation of the target mark in space, particularly with a horizontal orientation and an inclination of the target mark being determined.

10. Geodetic measuring system (1) comprising at least
• a geodetic measuring appliance according to one of Claims 1 to 9 for finding the position of a target point, and
• a known target mark with an external form which is designed such that the target point is indicated with a high level of precision in space by the target mark.

11. Method for determining the position of a target point with geodetic accuracy, which target point is indicated with a high level of precision in space by a known target mark with an external form designed for this purpose, using a geodetic measuring appliance (1) having
• a targeting device, particularly a telescopic sight, wherein the targeting device can swivel in motorized fashion relative to a base of the measuring appliance in order to change the orientation thereof and has at least
o an objective-lens unit (3) which defines an optical target axis (OA), and
o a camera sensor for acquiring a camera image of the targeted target mark,
• angle-measuring functionality for the high-precision capture of the orientation of the target axis, and
• evaluation means (50) for image processing, data storage and control of the orientation of the targeting device,
**characterized in that**
• a set of different target marks, which each define a target point with a high level of precision, is known, for each of which target mark samples corresponding to the external form of the respective target mark are stored in a target mark sample database in the evaluation means, wherein a respective main point in the target mark sample is defined as indicating the respective target point,
• the target mark sample corresponding to the respective target mark used is selected, and is called from the target mark sample database, automatically or by the user of the measuring appliance, and
• for the high-precision targeting of the target point indicated by the target mark the following steps being effected, in particular under the automatic control of the evaluation means (50):
○ taking a camera image of the target mark,
○ matching the called target mark sample, in particular making the called target mark sample consistent with, the target mark in the taken camera image by means of image processing, and
○ changing of the orientation of the targeting device in motorized fashion dependent on a position of the main point in the camera image in the matched state of the called target mark sample such that the optical target axis (OA) is oriented with a high level of precision to the target point.

12. Computer program product having program code which is stored on a machine-readable storage medium and contains a target mark sample database comprising different target mark samples, wherein the target mark samples each correspond to the external form of different known target marks, which each define a target point with a high level of precision, and a respective main point in the respective target mark samples is defined as indicating the respective target point,
for the purpose of performing
• the selection of the target mark sample corresponding to the respective target mark used and the calling of the target mark sample from the target mark sample database, which selection and calling are effected automatically or by virtue of a user input being requested and received, and
• the steps of the method according to Claim 11 which are effected for the purpose of achieving the high-precision targeting of the target point indicated by the target mark, particularly when the program is executed on an electronic data processing unit (16) in the form of evaluation means (50) for the geodetic measuring appliance (1) according to one of Claims 1 to 10.

## Revendications

1. Appareil de mesure géodésique (1), en particulier théodolite ou station totale, pour la détermination de position d'un point cible, indiqué de manière hautement précise dans l'espace au moyen d'un repère de visée connu, ayant une configuration extérieure conçue à cette fin,
avec
• un dispositif de ciblage, en particulier lunette de visée, le dispositif de ciblage étant susceptible de pivoter de manière motorisée par rapport à une base de l'appareil de mesure, dans le but de modifier son orientation, et présentant au moins :
○ une unité d'objectif (3) définissant un axe de visée optique (OA), et
○ un capteur de caméra, pour appréhender une image de caméra du repère de visée visé,
• une fonctionnalité de mesure d'angle, pour appréhender de manière hautement précise l'orientation de l'axe de visée, et
• des moyens d'évaluation (50), pour le traitement d'image, le stockage de données en mémoire et la commande de l'orientation du dispositif de ciblage,
**caractérisé en ce qu'**
• est connu un jeu de repères de visée différents, définissant chaque fois de manière hautement précise un point cible, repères de visée pour lesquels, chaque fois, des modèles de repère de visée, correspondant à la configuration extérieure du repère de visée respectif, sont stockés en mémoire dans une banque de données de modèles de repères de visée dans les moyens d'évaluation, chaque fois un point principal du modèle de repère de visée étant défini comme indicatif du point cible respectif, sachant que le modèle de repère de visée, correspondant au repère de visée chaque fois utilisé, pour la fonctionnalité de ciblage de point cible, est interrogeable, automatiquement ou par l'utilisateur de l'appareil de mesure, de manière pouvant être sélectionnée et à partir de la banque de données de modèles de repères de visée, et
• les moyens d'évaluation (50) étant réalisés pour l'accomplissement d'une fonctionnalité de ciblage automatique de point cible, de manière que, après initialisation de fonction, les étapes suivantes soient accomplies automatiquement :
○ enregistrement d'une image caméra du repère de visée,
○ mise en concordance, en particulier placement en coïncidence, du modèle de repère de visée interrogé avec le repère de visée dans l'image caméra, par traitement d'image, et
○ modification motorisée de l'orientation du dispositif de ciblage en fonction d'une position du point principal dans l'image caméra, à l'état de concordance du modèle de repère de visée interrogé, de manière que l'axe de visée optique (OA) soit orienté, de manière hautement précise, sur le point cible.

2. Appareil de mesure géodésique (1) selon la revendication 1,
**caractérisé en ce que**
les moyens d'évaluation, pour accomplir la fonctionnalité de ciblage automatique de point cible, sont réalisés de manière que, pour orienter de manière hautement précise l'axe de visée optique sur le point cible, les étapes d'enregistrement, de mise en concordance et de modification sont effectuées de manière répétée et l'orientation hautement précise est effectuée de manière itérative par approximation.

3. Appareil de mesure géodésique (1) selon la revendication 1 ou 2,
**caractérisé en ce que**
les moyens d'évaluation, pour accomplir la fonctionnalité de ciblage automatique de point cible, sont réalisés de manière que :
· après l'étape de mise en concordance, la position du point principal dans l'image caméra, ainsi qu'un écart de cette position par rapport à une position d'axe de visée dans l'image caméra, qui correspond au point ciblé par l'axe de visée dans l'image caméra, sont déterminés, et
• la modification de l'orientation du dispositif de ciblage est effectuée de manière itérative, de manière que la position du point principal et la position de l'axe de visée coïncident.

4. Appareil de mesure géodésique (1) selon la revendication 3,
**caractérisé en ce que**
les moyens d'évaluation, pour accomplir la fonctionnalité de ciblage automatique de point cible, sont réalisés de manière que la position du point principal dans l'image caméra soit déterminée dans le domaine des sous-pixels, c'est-à-dire avec une précision plus élevée qu'une résolution, définie par des pixels, du capteur de caméra, et la modification de l'orientation du dispositif de ciblage est effectuée de manière que la position du point principal et la position de l'axe de visée coïncident dans le domaine des sous-pixels, c'est-à-dire avec une précision plus élevée que la résolution, définie par des pixels, du capteur de caméra.

5. Appareil de mesure géodésique (1) selon l'une des revendications 1 à 4,
**caractérisé en ce qu'**
un gabarit de repère de visée est stocké en mémoire comme modèle de repère de visée.

6. Appareil de mesure géodésique (1) selon l'une des revendications 1 à 5,
**caractérisé en ce que**
les moyens d'évaluation, pour accomplir la fonctionnalité de ciblage automatique de point cible, sont réalisés de manière que, avant l'étape de mise en concordance, soit effectuée une graduation du modèle de repère de visée interrogé et à mettre en concordance, en fonction d'une distance d'éloignement, connue, estimée et/ou au moins déterminée de manière grossière, par rapport au repère de visée, en particulier en fonction d'une position focale actuelle d'un organe de focalisation, disposé dans le trajet de rayon entre l'unité d'objectif et le capteur de caméra, du dispositif de ciblage.

7. Appareil de mesure géodésique (1) selon l'une des revendications 1 à 6,
**caractérisé en ce que**
les moyens d'évaluation, pour accomplir la fonctionnalité de ciblage automatique de point cible, sont réalisés de manière que, après la mise en concordance, une graduation du modèle de repère de visée mis en concordance avec le repère de visée dans l'image caméra, soit mise à contribution pour déterminer une distance d'éloignement par rapport au repère de visée.

8. Appareil de mesure géodésique (1) selon l'une des revendications 1 à 7,
**caractérisé en ce que**
les moyens d'évaluation, pour accomplir la fonctionnalité de ciblage automatique de point cible, sont réalisés de manière que, avant l'étape de mise en concordance, une adaptation, en particulier une rotation et/ou une distorsion, du modèle de repère de visée interrogé, à mettre en concordance, est effectuée en fonction d'une orientation, connue, estimée et/ou au moins déterminée de manière grossière, du repère de visée dans l'espace.

9. Appareil de mesure géodésique (1) selon l'une des revendications 1 à 8,
**caractérisé en ce que**
les moyens d'évaluation, pour accomplir la fonctionnalité de ciblage automatique de point cible, sont réalisés de manière que, après la mise en concordance, une rotation et/ou une distorsion du modèle de repère de visée, mis en concordance avec le repère de visée dans l'image caméra, est mis à contribution pour la détermination d'une orientation du repère de visée dans l'espace, en particulier une orientation horizontale et une inclinaison du repère de visée étant déterminées.

10. Système de mesure géodésique (1), composé d'au moins :
• un appareil de mesure géodésique selon l'une des revendications 1 à 9, pour la détermination de position d'un point cible, et
• un repère de visée connu, ayant une configuration extérieure conçue de manière que le point cible soit indiqué de manière hautement précise dans l'espace par le repère de visée.

11. Procédé de détermination de position, s'effectuant avec une précision géodésique, d'un point cible, indiqué de manière hautement précise dans l'espace au moyen d'un repère de visée connu, ayant une configuration extérieure conçue à cette fin, en utilisant un appareil de mesure géodésique (1) comprenant :
• un dispositif de ciblage, en particulier lunette de visée, le dispositif de ciblage étant susceptible de pivoter de manière motorisée par rapport à une base de l'appareil de mesure, dans le but de modifier son orientation, et présentant au moins :
○ une unité d'objectif (3) définissant un axe de visée optique (OA), et
○ un capteur de caméra, pour appréhender une image de caméra du repère de visée visé,
• une fonctionnalité de mesure d'angle, pour appréhender de manière hautement précise l'orientation de l'axe de visée, et
• des moyens d'évaluation (50), pour le traitement d'image, le stockage de données en mémoire et la commande de l'orientation du dispositif de ciblage,
**caractérisé en ce qu'**
• est connu un jeu de repères de visée différents, définissant chaque fois de manière hautement précise un point cible, repères de visée pour lesquels, chaque fois, des modèles de repère de visée, correspondant à la configuration extérieure du repère de visée respectif, sont stockés en mémoire dans une banque de données de modèles de repères de visée dans les moyens d'évaluation, chaque fois un point principal du modèle de repère de visée étant défini comme indicatif du point cible respectif,
• le modèle de repère de visée, correspondant au repère de visée chaque fois utilisé, étant sélectionné, automatiquement ou par l'utilisateur de l'appareil de mesure, et interrogé à partir de la banque de données de modèles de repères de visée, et
• pour le ciblage hautement précis du point cible indiqué par le repère de visée, les étapes suivantes étant accomplies, en particulier automatiquement sous la commande des moyens d'évaluation (50) :
○ enregistrement d'une image caméra du repère de visée,
○ mise en concordance, en particulier placement en coïncidence, du modèle de repère de visée interrogé avec le repère de visée dans l'image caméra, par traitement d'image, et
○ modification motorisée de l'orientation du dispositif de ciblage en fonction d'une position du point principal dans l'image caméra, à l'état de concordance du modèle de repère de visée interrogé, de manière que l'axe de visée optique (OA) soit orienté, de manière hautement précise, sur le point cible.

12. Produit-programme informatique avec un code de programme, stocké en mémoire sur un support lisible par machine et contenant une banque de données de modèles de repères de visée composée de différents modèles de repères de visée, les modèles de repères de visée correspondant chaque fois à la configuration extérieure de repères de visée différents, connus, définissant chaque fois de manière hautement précise un point cible, et chaque fois un point principal du modèle de repère de visée respectif étant défini comme indicatif du point cible respectif, pour l'accomplissement
• de la sélection, s'effectuant de manière automatique ou par interrogation et réception d'une entrée utilisateur, du modèle de repère de visée correspondant au repère de visée chaque fois utilisé, et de l'interrogation du modèle de repère de visée à partir de la banque de données de modèles de repères de visée, ainsi que
• des étapes, s'accomplissant pour le ciblage hautement précis du point cible indiqué par le repère de visée,
du procédé selon la revendication 11, en particulier lorsque le programme est exécuté sur une unité de traitement de données (16) électronique, réalisée en tant que moyens d'évaluation (50) de l'appareil de mesure géodésique (1) selon l'une des revendications 1 à 10.
